(19) Europäisches Patentamt
European Patent Office
Office européen des brevets

(11) **EP 3 055 335 B1**

(12) **EUROPEAN PATENT SPECIFICATION**

(45) Date of publication and mention
of the grant of the patent:
**12.12.2018 Bulletin 2018/50**

(21) Application number: **14776587.9**

(22) Date of filing: **24.09.2014**

(51) Int Cl.:
*C08F 2/00* (2006.01)       *C08L 23/06* (2006.01)
*F16L 9/12* (2006.01)       *C08F 210/16* (2006.01)

(86) International application number:
**PCT/EP2014/002589**

(87) International publication number:
**WO 2015/051880 (16.04.2015 Gazette 2015/15)**

(54) **HIGH TEMPERATURE RESISTANT POLYETHYLENE AND PROCESS FOR THE PRODUCTION THEREOF**

HOCHTEMPERATURBESTÄNDIGES POLYETHYLEN UND VERFAHREN ZU SEINER HERSTELLUNG

POLYÉTHYLÈNE RÉSISTANT AUX TEMPÉRATURES ÉLEVÉES ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2013 EP 13004876**

(43) Date of publication of application:
**17.08.2016 Bulletin 2016/33**

(73) Proprietor: **Borealis AG**
**1220 Vienna (AT)**

(72) Inventors:
• **TYNYS, Antti**
**4020 Linz (AT)**
• **KELA, Jarmo**
**FIN-06100 Porvoo (FI)**
• **TUPE, Ravindra**
**Mumbai 400050,**
**Maharashtra (IN)**
• **PIEL, Tanja**
**A-4030 Linz (AT)**

(74) Representative: **Kador & Partner PartG mbB**
**Corneliusstraße 15**
**80469 München (DE)**

(56) References cited:
**EP-A1- 1 146 079     EP-A1- 1 760 096**
**EP-A1- 2 186 833     EP-A1- 2 570 455**
**EP-A1- 2 583 998     EP-A1- 2 599 828**

## Description

The present invention relates to polyethylene, particularly polyethylene for pipe applications. In particular, the present application relates to a polyethylene compositions comprising a base resin with a high density, broad molecular weight distribution and high polydispersity index PI and concomitantly the polyethylene composition has an improved homogeneity and is suitable for pipe applications, the production of the polyethylene composition by a process, an article, such as a pipe, made thereof and the use of the polyethylene composition for the production of such an article.

## Background of the invention

Numerous polyethylene compositions for the production of pipes are known. Pipe materials are classified such as PE80 or PE100. The service temperature for PE100 is 20 °C. The IS0 9080 classification guarantees that a PE100 material will have a lifetime of at least 50 years at 20 °C using internal stress of 10 MPa.

EP1987097 in the name of Chevron Phillips Chemical Company discloses a polyethylene suitable for pipe having a pellets' density of 947 kg/m$^3$ to 954 kg/m$^3$ and a $MFR_{21}$, (ASTM D1238, 21.6 kg load) of 1 to 30 g/10min. The exemplified resins showed weight average molecular weights of 278 to 346 kg/mol at Mw/Mn of from 30.5 to 35.1.

EP1781712 in the name of UNIVATION TECH LLC [US] discloses various compositions, including but not limited to a high strength bimodal polyethylene composition having a density of 0.940 g/cc or more, the composition comprising a high molecular weight polyethylene component having a higher weight average molecular weight (HwHMW) and a low molecular weight polyethylene component having a lower weight average molecular weight (HwLMW), wherein: the ratio of the higher weight average molecular weight to the lower weight average molecular weight (MwHMW:MwLMW) is 30 or more; and the composition qualifies as a PE 100 material such that in accordance with ISO 1167 a pipe formed from the composition that is subjected to internal pipe resistance has an extrapolated stress of 10 MPa or more when the internal pipe resistance curve is extrapolated to 50 or 100 years in accordance with ISO 9080:2003.

EP1922342 of the Ineos group discloses compositions having a natural density of 935 up to 956 kg/m$^3$ at a melt flow rate (5 kg load) of 0.15 to 0.5 g/10min, the comonomer being 1-hexene and a dynamic viscosity at 100 rad/s, 190 °C of no more than 2500 Pa s.

EP 1146079 in the name of Borealis Technology Oy discloses compositions having a powder density of at least 953 kg/m$^3$ and a final density of the composition in the range of 955 to 965 kg/m$^3$, a $MFR_5$ of 0.15 to 0.40 g/10min. Pipes made from the compositions met a design stress of at least 9.0 MPa (PE112). The compositions are composed of two components, whereby the low molecular weight component is a ethylene homopolymer having a $MFR_2$ of 350 to 1500 g/10min and is present in an amount of 42 to 55 wt.-%.

According to IS0 9080 polyethylene pipes are classified by their minimum required strength, i.e. their capability to withstand different hoop stresses during 50 years at 20 °C without fracturing. Thereby, pipes withstanding a hoop stress of 8.0 MPa (MRS8.0) are classified as PE80 pipes, and pipes withstanding a hoop stress of 10.0 MPa (MRS10.0) are classified as PE100 pipes. The next evolutionary step in polyethylene pipe development will be PE125 pipes withstanding a hoop stress of 12.5 MPa (MRS12.5). To meet the PE80 requirements with multimodal resins manufactured by conventional Ziegler-Natta catalysts, the density needs to be at least 940 kg/m$^3$ and to meet PE100 requirements the density needs to be above 945 kg/m$^3$. However, the density of a polyethylene resin is directly connected with its crystallinity. The higher the crystallinity of a polyethylene resin the lower its slow crack growth resistance. In other words, all polyethylene materials for pressure resistance of a pipe suffer from the dependency of crystallinity and insofar density and the slow crack growth. When the density is increased, the resistance to slow crack growth (SCG) decreases.

Hence, there is still a need for polyethylene compositions comprising a base resin with a high density, broad molecular weight distribution and high polydispersity index PI for the production of pipes with an improved balance of properties as regards processability, slow crack growth, resistance, rapid crack propagation resistance and homogeneity.

## Summary **of the invention**

The present invention is based on the surprising finding that pipes having such an improved balance of properties can be provided if the pipes are made from polyethylene composition comprising

a base resin having a density of more than 952.0 kg/m$^3$ and equal to or less than 957.0 kg/m$^3$, determined according to IS0 1183-1:2004,

wherein the composition has a melt flow rate $MFR_5$ (190 °C, 5 kg) of 0.12 to 0.21 g/10min, determined according to IS0 1133 and a flow rate ratio $FRR_{21/5}$, being the ratio of $MFR_{21.6}$ to $MFR_5$, of 30 to 55, determined according to ISO 1133, and the polyethylene composition has a polydispersity index PI within the range of equal to or higher than 4.9 Pa$^{-1}$ and equal to or less than 9.0 Pa$^{-1}$.

The present invention insofar is based on the surprising finding that polyethylene compositions comprising a base resin with a high density, broad molecular weight distribution and high polydispersity index PI for the production of pipes having an improved balance of properties as regards processability, slow crack growth, resistance, rapid crack propagation resistance and homogeneity can be provided and the present invention provides

a polyethylene composition comprising

a base resin having a density of more than 952.0 kg/m$^3$ and equal to or less than 957.0 kg/m$^3$, determined according to IS0 1183-1 :2004,

wherein the composition has a melt flow rate MFR$_5$ (190 °C, 5 kg) of 0.12 to 0.21 g/10min, determined according to IS0 1133 and a flow rate ratio FRR$_{21/5}$, being the ratio of MFR$_{21.6}$ to MFR$_5$, of 30 to 55, determined according to ISO 1133, and the polyethylene composition has a polydispersity index PI within the range of equal to or higher than 4.9 Pa$^{-1}$ and equal to or less than 9.0 Pa$^{-1}$.

The present invention further provides a polyethylene composition obtainable by a multistage process, the multistage process comprising

a) polymerizing ethylene in the presence of

(i) a silica supported Ziegler Natta catalyst having a molar composition of the catalyst including

| | |
|---|---|
| Al | 1.30 to 1.65 mol/kg silica, |
| Mg | 1.25 to 1.61 mol/kg silica, |
| Ti | 0.70 to 0.90 mol/kg silica, |

and having a mean particle size (D50) of 7 to 15 $\mu$m;

(ii) in a first loop reactor in the presence of an alkyl aluminium compound and a chain transfer agent for obtaining a first intermediate material, the first intermediate material having a melt flow rate MFR$_2$ (190 °C, 2.16 kg) of 220 to 400 g/10min; and

b) transferring the reaction product including said first intermediate material to a second loop reactor

(i) feeding ethylene to the second loop reactor

(ii) further polymerizing said first intermediate material

for obtaining a second intermediate material, the second intermediate material having a melt flow rate MFR$_2$ (190°, 2.16 kg) of 1.10 to 1.35 times the melt flow rate MFR$_2$ (190°, 2.16 kg) of said first intermediate material; and

c) transferring the reaction product including said second intermediate material to a gas phase reactor

(i) feeding ethylene and comonomer to the gas phase reactor

(ii) further polymerizing said second intermediate material for obtaining the base resin having a density of more than 952.0 kg/m$^3$ and equal to or less than 957.0 kg/m$^3$, determined according to ISO 1183-1:2004,

d) extruding the base resin together with stabilizers and carbon black into the polyethylene composition wherein the composition has a melt flow rate MFR5 (190°C, 5 kg) of 0.12 to 0.21 g/10min, determined according to ISO 1133, and a polydispersity index PI within the range of higher than 4.9 Pa-1 and equal to or less than 9.0 Pa-1.

In a further aspect, the present invention provides an article, particularly a pipe, comprising the polyethylene composition according to the present invention.

In yet a further aspect, the present invention is concerned with the use of the inventive polyethylene composition for the production of an article, particularly a pipe.

The catalyst used in the present invention is preferably prepared by the following method:

(i) preparing a magnesium complex by reacting dialkyl magnesium compound of formula Mg(R)$_2$, where each R are the same or different alkyl groups of 1 to 10 C-atoms, preferably 2 to 10 C-atoms, most preferably butyloctyl magnesium, with an alcohol of formula R'OH, where R' is an alkyl group of 2 to 16 C-atoms, preferably 4 to 10 C-atoms, most preferably with 2-ethyl-hexanol in an aromatic solvent at a molar ratio of 1:1.70 to 1:1.95, preferably 1:1.75 to 1:1.90,

(ii) charging calcinated silica having a mean particle size (D50) in the range of 7 to 15 $\mu$m, preferably of 8 to 12 $\mu$m and an aliphatic hydrocarbon solvent, suitably pentane, into a catalyst preparation reactor,

(iii) adding alkyl aluminium chloride compound of formula $AlR_nX_{3-n}$, wherein R is a $C_1$-$C_{10}$ alkyl group, more preferably a $C_2$-$C_6$ alkyl group and most preferably a $C_2$-$C_4$ alkyl group; X is halogen, preferably chloride and n is 1 or 2, preferably 1, and mixing at a temperature of 10 to 70 °C, preferably at 20 to 60 °C, most preferably at 40 to 50°C, the aluminium compound is preferably ethylaluminium dichloride,

(iv) adding the magnesium complex prepared in step i) at 20 to 50 °C, preferably at 30 to 50 °C, most suitably at 40 to 50 °C in a ratio of 2.40 to 2.70 mol Mg/kg silica, preferably in a ratio of 2.45 to 2.65 mol Mg/kg silica,

(v) adding additional aliphatic hydrocarbon solvent, preferably pentane, into the reactor and keeping the temperature at above 40 °C,

(vi) stirring the mixture for 3 to 5 hours at a temperature of 45 to 55 °C,

(vii) adding $TiCl_4$ in an amount of 1.40 to 1.65 mol/kg silica during at least 1 hour at 45 to 55 °C to the reactor,

(viii) mixing the catalyst mixture at 50 to 60 °C for at least 5 hours, and

(ix) drying the catalyst mixture by vacuum and/or with nitrogen flow.

Additions of Al, Mg and Ti compounds are preferably done within 1 to 3 hours and further preferably after each addition step, the mixture is stirred for additional 1 to 6 hours.

**Definitions**

A polyethylene composition according to the present invention denotes a polymer derived from at least 50 mol-% ethylene monomer units and additional comonomer units.

The term 'base resin' denotes the polymeric part of the polyethylene composition without fillers such as carbon black. A person skilled in the art will understand that the measurements as to the base resin require the presence of stabilizers.

The base resin according to the present invention denotes a polymer derived from at least 50 mol-% ethylene monomer units and additional comonomer units.

In addition to the base resin, usual additives for utilization with polyolefins, such as pigments (e.g. carbon black), stabilizers (e.g. antioxidant agents), antacids and/or anti-UV's, antistatic agents and utilization agents (such as processing aid agents) may be present in the polyethylene composition. Preferably, the amount of these additives is 10 wt% or below, more preferably 8 wt% or below, most preferably 5 wt% or below, of the composition.

Preferably, the composition comprises carbon black in an amount of 8 wt% or below, more preferably in an amount of 1 to 4 wt%, of the total composition.

Further preferred, the amount of additives different from carbon black is 1 wt% or less, more preferably 0.5 wt% or less.

An 'ethylene homopolymer' denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

A polymer is denoted 'ethylene copolymer' if the polymer is derived from ethylene monomer units and at least one alpha-olefin comonomer. The alpha-olefin conomoner preferably is selected from alpha-olefin conomoners with 3 to 12 carbon atoms, more preferably 4 to 8 carbon atoms. Suitable alpha-olefin comonomer species are 1-butene, 1-hexene, 4-methyl-1-pentene, 1-octene or their mixtures. Preferred are 1-butene and 1-hexene. Most preferred is 1-hexene. In one preferred embodiment fraction (C) denotes a copolymer of ethylene and at least one alpha-olefin comonomer.

The 'polydispersity index' PI is a rheological measurement of the broadness of the molecular weight distribution curve.

All rheological measurements can be performed with the base resin and with the polyethylene composition. As a matter of definition, all rheological properties shall preferably also apply to the polyethylene composition.

The term 'catalyst system' shall denote the composition formed by the catalyst and the cocatalyst.

**General**

**Polyethylene composition**

The polyethylene composition is further characterized by the following properties:

*$MFR_5$ (composition)*

The polyethylene composition according to the present invention has a melt flow rate $MFR_5$ (190 °C, 5 kg) of 0.12 to 0.21 g/10min, preferably 0.13 to 0.20 g/10min, more preferably 0.14 to 0.19 g/10min and most preferably 0.15 to 0.19 g/10min determined according to IS0 1133.

*$MFR_{21.6}$*

The composition has preferably a melt flow rate $MFR_{21.6}$ (190°C, 21.6 kg) of 3.0 to 13.0 g/10min, determined according to ISO 1133. More preferably, the $MFR_{21.6}$ is 4.0 to 12 g/10min, even more preferably 5.5 to 11 g/10min and most preferably 6.0 to 9.0 g/10min.

*$FRR_{21/5}$*

The composition according to present invention has a flow rate ratio $FRR_{21/5}$, being the ratio of $MFR_{21.6}$ to $MFR_5$ of 30.0 to 55.0, preferably 33.0 to 50.0, more preferably 35.0 to 47.0 and most preferably 37.0 to 46.0. These $FRR_{21/5}$ ranges preferably also apply to the base resin according to the present invention.

*Density (composition)*

The polyethylene composition according to the present invention has preferably a density of more than 963.0 $kg/m^3$ and equal to or less than 971.0 $kg/m^3$, more preferably of more than 963.5 $kg/m^3$ and equal to or less than 970.0 $kg/m^3$, even more preferably of more than 964.0 $kg/m^3$ and equal to or less than 969.0 $kg/m^3$ and most preferably of more than 964.5 $kg/m^3$ and equal to or less than 968.0 kg/m3 determined according to IS0 1183-1:2004.
The density of the polyethylene composition is influenced by the density of the base resin and can further be adjusted by the amount of filler, usually carbon black, in the polyethylene composition.
The composition is further characterized by specific rheological properties.

*PI (composition)*

The composition has a polydispersity index PI within the range of higher than 4.9 $Pa^{-1}$ and equal to or less than 9.0 $Pa^{-1}$, preferably within the range of equal to or higher than 5.5 $Pa^{-1}$ and equal to or less than 8.5 $Pa^{-1}$ and most preferably within the range of equal to or higher than 6.0 $Pa^{-1}$ and equal to or less than 6.5 $Pa^{-1}$.

*$SHI_{5/300}$*

The composition preferably has a shear thinning index $SHI_{5/300}$ of 250 to 1500, more preferably a shear thinning index $SHI_{5/300}$ of 400 to 1300, even more preferably a shear thinning index $SHI_{5/300}$ of 700 to 1200, and most preferably a shear thinning index $SHI_{5/300}$ of 800 to 1100. The shear thinning index $SHI_{5/300}$ can be modified for a given catalyst system by varying the relative amounts of low and high molecular weight material (via split of the reactors) and by varying the molecular weights of the respective low and high molecular weight materials for example by variation of the chain transfer agent feed. Moreover, different catalyst systems result in a specific intrinsic shear thinning index.

*G'(5 kPa)*

The composition according to the present invention preferably has a storage modulus of G' (5 kPa) of 3500Pa to 4900Pa, more preferably 3700Pa to 4700Pa, even more preferably 4000Pa to 4450Pa and most preferably 4200Pa to 4350Pa.

*G'(2 kPa)*

The composition according to the present invention preferably has a storage modulus of G' (2 kPa) of 1000Pa to 2000Pa, more preferably 1200Pa to 1900Pa, even more preferably 1300Pa to 1800Pa and most preferably 1550Pa to 1750Pa.

The storage modulus is significantly influenced by the amount of very high molecular weight material. Higher values of storage modulus of G' (2 kPa) indicate a broad molecular weight distribution from qualitative and general point of view.

*Complex viscosity eta0.05 rad/s*

The composition according to the present invention preferably has a complex viscosity at 0.05 rad/s eta* 300 kPa·s to 450 kPa·s, more preferably 330 kPa·s to 430 kPa·s, even more preferably 350 kPa·s to 420 kPa·s and most preferably 380 kPa·s to410 kPa·s.

*Complex viscosity eta300 rad/s*

The composition according to the present invention preferably has a complex viscosity at 300 rad/s eta* of 900 kPa·s to 1300 kPa·s, more preferably 960 kPa·s to 1200 kPa·s, and most preferably 1000 kPa·s to 1150 kPa·s.

The rheological properties described above have been determined on the polyethylene composition which additionally may comprise further components such as carbon black. The properties, however, can also be determined on the base resin which does not comprise further components such as carbon black. The rheological properties determined on the base resin preferably are in the same ranges as disclosed for the rheological properties determined on the polyethylene composition.

The polyethylene composition is further characterized by the following parameters.

*Carbon black and additives*

Additives typically used with polyolefins are for instance pigments, carbon black, stabilizers (e.g. antioxidant agents), antiacids and/or anti-UV's, antistatic agents and utilization agents (such as processing aid agents).

Preferably, the polyethylene composition comprises carbon black in an amount of 8 wt% or below, more preferably in an amount of 1 to 4 wt%, of the total polyethylene composition.

Further preferred, the amount of additives different from carbon black such as stabilizers is 1 wt% or less, more preferably 0.5 wt% or less.

*White spot rating (WSR)*

Further, the polyethylene composition preferably has a WSR of below 2.5%, more preferably below 1.5%, most preferably below 1.1%. The lower limit of the WSR is preferably 0.001%, when measured according to ISO 18 553/2002-03-01.

The WSR is a measure for the homogeneity of the polyethylene composition. The "white spots" having typically a size of 10 to 50 μm consist of high molecular weight polymer particles inadequately compounded in the polyethylene composition. It is known that homogeneity of a multimodal polymer composition can be improved by applying multiple compounding steps which is elaborate and hence cost intensive. However, the WSR of the polyethylene composition of the present invention has been determined after a single compounding step.

**Base Resin**

The base resin is further characterized by the following parameters.

*Comonomer content of alpha-olefin comonomer units*

The base resin is preferably a copolymer of ethylene and at least one alpha-olefin comonomer unit with 3 to 12 carbon atoms. More preferably the at least one alpha-olefin comonomer unit has 4 to 8 carbon atoms. The comonomers preferably are selected from the group comprising 1-butene, 1-hexene, 4-methyl-1-pentene, 1-octene or their mixtures. More preferably 1-butene or 1-hexene and most preferably 1-hexene is used as comonomer.

The base resin according to the present invention preferably has a comonomer content derived from alpha-olefin comonomer units with 3 to 12 carbon atoms of 0.45 to 0.95 wt.-%, more preferably 0.45 to 0.8 wt.-%, even more preferably 0.45 to 0.6 wt.-%.

*Density (base resin)*

The base resin according to the present invention has a density of more than 952.0 kg/m$^3$ and equal to or less than 957.0 kg/m$^3$, preferably of more than 952.5 kg/m$^3$ and equal to or less than 956.0 kg/m$^3$, more preferably of more than 953 kg/m$^3$ and equal to or less than 956.0 kg/m$^3$ and most preferably of more than 953.5 kg/m$^3$ and equal to or less than 955.5 kg/m$^3$ determined according to IS0 1183-1:2004.

The density of the base resin is mainly influenced by the amount and type of comonomer. In addition to that, the nature of the polymer originating mainly from the catalyst used as well as the melt flow rate play a role. In addition to that it should be stressed that the comonomer need not to be a single comonomer. Mixtures of comonomers are also possible.

The base resin preferably comprises at least three ethylene homo- or copolymer fractions (A), (B) and (C) being different in their weight average molecular weight Mw.

Thereby fraction (A) and (B) preferably are an ethylene homopolymer and fraction (C) preferably is a copolymer of ethylene and at least one alpha-olefin comonomer unit with 3 to 12 carbon atoms.

Fraction (A) preferably has a melt flow rate MFR$_2$ (190 °C, 2.16 kg) of 220 to 400 g/10 min.

The melt flow rate MFR$_2$ (190°, 2.16 kg) of combined fractions (A) and (B) is preferably 1.10 to 1.35 times the MFR$_2$ of fraction (A).

Combined fractions (A) and (B) are preferably present in an amount of 50 to 55 wt.-%.

Optionally, the base resin according to the present invention comprises a pre-polymer faction.

Thus in a first embodiment of the invention the base resin of the polyethylene composition comprises, preferably consists of, a pre-polymer fraction, and fractions (A), (B) and (C).

In a second embodiment of the invention the base resin of the polyethylene composition comprises, preferably consists of, fractions (A), (B) and (C).

Hence, in a first preferred embodiment of the present invention the base resin consists of three ethylene homo- or copolymer fractions (A), (B) and (C) being different in their weight average molecular weight Mw,

wherein fraction (A) and (B) is an ethylene homopolymer and fraction (C) is a copolymer of ethylene and at least one alpha-olefin comonomer unit with 3 to 12 carbon atoms,

whereby fraction (A) has a melt flow rate MFR$_2$ (190 °C, 2.16 kg) of 220 to 400 g/10 min,

the melt flow rate MFR$_2$ (190°, 2.16 kg) of combined fractions (A) and (B) is 1.10 to 1.35 times,

wherein combined fractions (A) and (B) are present in an amount of 50 to 55 wt.-%.

In a second preferred embodiment of the present invention the base resin consists of a pre-polymer fraction and three ethylene homo- or copolymer fractions (A), (B) and (C) being different in their weight average molecular weight Mw,

wherein fraction (A) and (B) is an ethylene homopolymer and fraction (C) is a copolymer of ethylene and at least one alpha-olefin comonomer unit with 3 to 12 carbon atoms,

whereby fraction (A) has a melt flow rate MFR$_2$ (190 °C, 2.16 kg) of 220 to 400 g/10 min,

the melt flow rate MFR$_2$ (190°, 2.16 kg) of combined fractions (A) and (B) is 1.10 to 1.35 times,

wherein combined fractions (A) and (B) are present in an amount of 50 to 55 wt.-%.

Both preferred embodiments, first and second, are preferred equally.

*Fraction (A)*

The melt flow rate MFR$_2$ (190 °C, 2.16 kg) of fraction (A) is preferably 220 to 400 g/10min, more preferably 240 to 380 g/10 min and most preferably 260 to 350 g/10 min.

Furthermore, the density of fraction (A) is preferably equal or more than 970 kg/m$^3$.

The amount of fraction (A) in the base resin is preferably 15 to 35 wt.-%, more preferably 20 to 30 wt.-% and most preferably 23 to 27 wt.-% based on the total weight of the base resin.

*Combined fractions (A) and (B)*

The melt flow rate MFR$_2$ (190 °C, 2.16 kg) of combined fractions (A) and (B) is preferably 1.10 to 1.35 times and more preferably 1.20 to 1.30 times the melt flow rate MFR$_2$ (190°, 2.16 kg) of fraction (A).

Furthermore, melt flow rate MFR$_2$ (190 °C, 2.16 kg) of combined fractions (A) and (B) is preferably 250 to 600 g/10 min, more preferably of 270 to 550 g/10min, even more preferably of 300 to 500 g/10 min and most preferably of 320 to 450 g/10min.

Additionally, the amount of combined fractions (A) an (B) in the base resin is preferably 50 to 55 wt.-%, more preferably 49 to 54 wt.-% and most preferably 49.5 to 53 wt.-% based on the total weight of the base resin.

*Fraction (C)*

Fraction (C) is preferably a copolymer of ethylene and at least one alpha-olefin comonomer unit with 3 to 12 carbon atoms. The comonomers preferably are selected from the group comprising 1-butene, 1-hexene, 4-methyl-1-pentene, 1-octene or their mixtures. Moore preferably 1-butene or 1-hexene and most preferably 1-hexene is used as comonomer.

Fraction (C) according to the present invention preferably has a comonomer content derived from alpha-olefin comonomer units with 3 to 12 carbon atoms of 0.45 to 0.95 wt.-%, more preferably 0.45 to 0.8 wt-%, even more preferably 0.45 to 0.6 wt-%.

*Pre-polymer faction*

Optionally, the base resin according to the present invention comprises a pre-polymer faction which adds to the amount of fraction A. The pre-polymer fraction preferably is present in the base resin in an amount of up to 7.5 wt%, more preferably in an amount of up to 5 wt% and most preferably in an amount of up to 3 wt% of the total base resin.

The pre-polymer fraction preferably is an ethylene homopolymer.

In addition to ethylene monomer it is possible to use one or more alpha-olefin comonomers in the pre-polymerisation step if desired. Suitable comonomers are, for example, 1-butene, 1-hexene, 4-methyl-1-pentene, 1-octene and their mixtures.

It is however preferred that in the pre-polymerization step an ethylene homopolymer prepolymer fraction is polymerized.

In a further aspect, the present invention is concerned with a polyethylene composition obtainable by a multistage process, the multistage process comprising

a) polymerizing ethylene in the presence of

(i) a silica supported Ziegler Natta catalyst having a molar composition of the catalyst including

| | |
|---|---|
| Al | 1.30 to 1.65 mol/kg silica, |
| Mg | 1.25 to 1.61 mol/kg silica, |
| Ti | 0.70 to 0.90 mol/kg silica, |

and having a mean particle size (D50) of 7 to 15 $\mu$m;

(ii) in a first loop reactor in the presence of an alkyl aluminium compound and a chain transfer agent for obtaining a first intermediate material, the first intermediate material having a melt flow rate $MFR_2$ (190 °C, 2.16 kg) of 220 to 400 g/10min; and

b) transferring the reaction product including said first intermediate material to a second loop reactor

(i) feeding ethylene to the second loop reactor

(ii) further polymerizing said first intermediate material for obtaining a second intermediate material, the second intermediate material having a melt flow rate $MFR_2$ (190°, 2.16 kg) of 1.10 to 1.35 times the melt flow rate $MFR_2$ (190°, 2.16 kg) of said first intermediate material; and

c) transferring the reaction product including said second intermediate material to a gas phase reactor

(i) feeding ethylene and comonomer to the gas phase reactor

(ii) further polymerizing said second intermediate material

for obtaining the base resin having a density of more than 952.0 kg/m$^3$ and equal to or less than 957.0 kg/m$^3$, determined according to ISO 1183-1:2004,

d) extruding the base resin together with stabilizers and carbon black into the polyethylene composition wherein the composition has a melt flow rate MFR5 (190°C, 5 kg) of 0.12 to 0.21 g/10min, determined according to ISO 1133, and a polydispersity index PI within the range of higher than 4.9 Pa-1 and equal to or less than 9.0 Pa-1.

The molar composition of the catalyst including Al (aluminium) is: 1.30 to 1.65 mol/kg silica, preferably 1.33 to 1.63 mol/kg silica, more preferably 1.35 to 1.60 mol/kg silica.

Furthermore, the molar composition of the catalyst including Mg (magnesium) is: 1.25 to 1.61 mol/kg silica, preferably 1.26 to 1.60 mol/kg silica, more preferably 1.30 to 1.55 mol/kg silica.

Additionally, the molar composition of the catalyst including Ti (titan) is: 0.70 to 0.90 mol/kg silica, preferably 0.71 to 0.88 mol/kg silica, more preferably 0.72 to 0.85 mol/kg silica.

Moreover, the silica supported Ziegler Natta catalyst has a mean particle size (D50) of 7 to 15 $\mu$m, preferably of 8 to 12 $\mu$m.

The first intermediate material preferably comprises of fraction (A), optionally together with a pre-polymer fraction of the base resin.

More preferably, the first intermediate material essentially consists of fraction (A), optionally together with a pre-polymer fraction of the base resin.

The second intermediate material preferably comprises fractions (A) and (B), optionally together with a pre-polymer fraction of the base resin.

More preferably, the second intermediate material essentially consists of fractions (A) and (B), optionally together with a pre-polymer fraction of the base resin.

The base resin preferably comprises fractions (A), (B) and (C), optionally together with a pre-polymer fraction of the base resin.

More preferably, the base resin essentially consists of fractions (A), (B) and (C), optionally together with a pre-polymer fraction of the base resin.

Furthermore, polyethylene composition, base resin, pre-polymer fraction, faction (A), fraction (B) and fraction (C) shall be defined as above.

In yet a further aspect, the present invention is concerned with an article comprising the polyethylene composition as described above obtainable by a multistage process as described above and the use of such a polyethylene composition for the production of an article.

The article is preferably a pipe or pipe fitting.

Such pipes are further characterized by the following properties.

*Slow crack propagation resistance*

The pipe comprising the polyethylene composition according to the present invention preferably has a slow crack propagation resistance in a pressure test on notched pipes (NPT) determined according to ISO 13479-2009 at a pressure of 9.2 bar and a temperature of 80°C of at least 300 h, more preferably of at least 350 h, even more preferably of at least 390 h, and most preferably at least 425 h. The upper limit of the slow crack propagation resistance is usually not higher than 1000 h, preferably not higher than 700 h.

*Resistance to internal pressure*

The pipe comprising the polyethylene composition according to the present invention preferably has a resistance to internal pressure in a pressure test on un-notched pipes (PT) determined according to ISO 1167-1:2006 at a hoop stress of 13 MPa and a temperature of 20°C of at least 200 h, more preferably of at least 250 h and most preferably at least 260 h. The upper limit of the resistance to internal pressure is usually not higher than 1000 h, preferably not higher than 600 h.

Furthermore, pipe comprising the polyethylene composition according to the present invention preferably has a resistance to internal pressure in a pressure test on un-notched pipes (PT) determined according to ISO 1167-1:2006 at a hoop stress of 12.6 MPa and a temperature of 20°C of at least 700 h and most preferably at least 900 h. The upper limit of the resistance to internal pressure is usually not higher than 3000 h, preferably not higher than 2500 h.

Furthermore, pipe comprising the polyethylene composition according to the present invention preferably has a resistance to internal pressure in a pressure test on un-notched pipes (PT) determined according to ISO 1167-1:2006 at a hoop stress of 5.9 MPa and a temperature of 80°C of at least 1200 h and most preferably at least 1300 h. The upper limit of the resistance to internal pressure is usually not higher than 4000 h, preferably not higher than 3000 h.

*S4 critical temperature*

Moreover the pipes pipe comprising the polyethylene composition of the present invention preferably have a S4 temperature of lower than -15.0 °C, more preferably a S4 temperature of lower than -18.0 °C, even more preferably a S4 temperature of lower than -20.0 °C and most preferably a S4 temperature of - 22.0 °C or lower. The S4 temperature is usually not lower than -25.0 °C.

In addition to the aspects mentioned above, the present invention is concerned with the use of the polyethylene composition according to the present invention for the production of an article, preferentially a pipe or a pipe fitting.

**Figure**

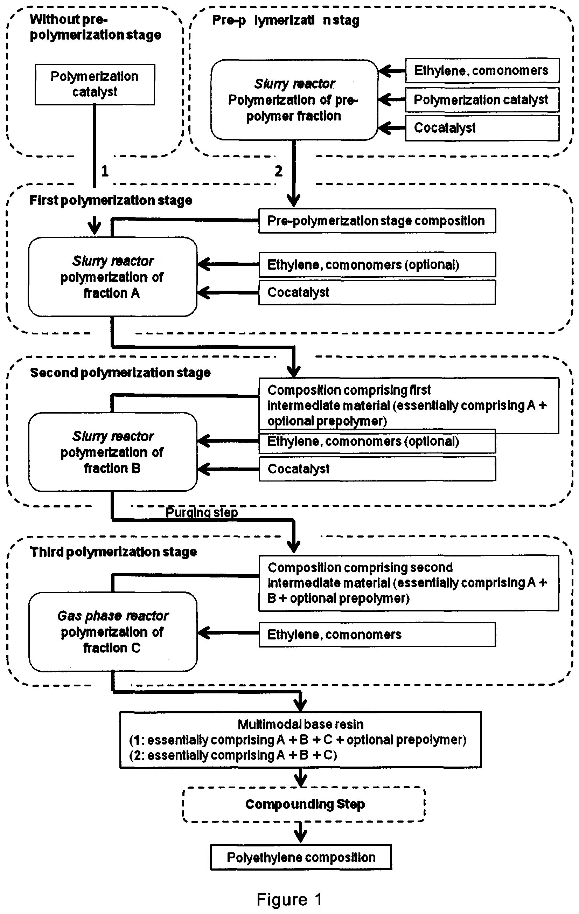

Figure 1 shows a flow chart of the multistage process of the present invention.

**Process**

The inventive polyethylene composition for making polyethylene pressure pipes is produced by polymerizing respectively copolymerizing ethylene in a reactor cascade formed by at least a first reactor, at least a second reactor and at least a third reactor, whereby preferably the first reactor is a loop reactor, preferably the second reactor is a loop reactor and further preferably, the third reactor is a gas phase reactor. The polymerization process is further outlined in Fig. 1.

The polymerization applies a silica supported catalyst having a molar composition of the catalyst including Al: 1.30 to 1.65 mol/kg silica, preferably 1.33 to 1.63 mol/kg silica, more preferably 1.35 to 1.60 mol/kg silica, Mg: 1.25 to 1.61 mol/kg silica, preferably 1.26 to 1.60 mol/kg silica, more preferably 1.30 to 1.55 mol/kg silica and Ti: 0.70 to 0.90 mol/kg silica, preferably 0.71 to 0.88 mol/kg silica, more preferably 0.72 to 0.85 mol/kg silica.

The average particle size of the catalysts used in the field is typically from 10 to 100$\mu$m. However, according to the present invention, it has turned out that special advantages can be obtained if the catalyst has a mean particle size from (D50) of 7 to 15$\mu$m, preferably from 8 to 12$\mu$m.

The catalyst particle size is mainly influenced by the particle size of the support material, in the present case silica support material. Thus, suitable support materials for the catalyst used in the present invention are silica support materials having reasonable small particle size, i.e. silica with a mean particle size (D50) below 15 $\mu$m, preferably 7 to 15 $\mu$m, like 8 to 12 $\mu$m. One example of suitable silica support is, Sylopol2100, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is the most preferred alcohol.

The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. An especially preferred titanium compound is titanium tetrachloride.

The catalyst can be prepared by sequentially contacting the carrier with the above mentioned compounds as described in EP-A-688794. Alternatively, it can be prepared by first preparing a solution from the components and then contacting the solution with a carrier as described in WO-A-01155230. Preferably the catalyst is prepared according to the general preparation concept as disclosed in EP-A-688794 and described in detail in the present application.

The catalyst as described above is used together with a cocatalyst, also called activator. Suitable cocatalysts are metal alkyl compounds and especially aluminium alkyl compounds. These compounds include alkyl aluminium halides, such as ethylaluminium dichloride, diethylaluminium chloride, ethylaluminium sesquichloride, dimethylaluminium chloride and the like. They also include trialkylaluminium compounds, such as trimethylaluminium, triethylaluminium, tri-isobutylaluminium, trihexylaluminium and tri-n-octylaluminium. Especially preferred cocatalysts are trialkylaluminiums, of which triethylaluminium, trimethylaluminium and tri-isobutylaluminium are particularly used, most preferably triethylaluminium (TEA).

The catalyst as described above is contacted with the cocatalyst as described above. The contacting of the catalyst and the cocatalyst can either be conducted prior to introducing the catalyst into the polymerization reactor, or it can be conducted by introducing the two components separately into the polymerization reactor(s).

In the catalyst system according to the present invention, i.e. the combination of the catalyst and the cocatalyst according to the present invention, the molar ratio between the aluminium in said cocatalyst and the titanium of said catalyst is preferably 20:1 to 5:1, more preferably 15:1 to 7:1 and most preferably 12:1 to 8:1.

**Pipe production**

Polymeric pipes are generally manufactured by extrusion, or, to a small extent, by injection moulding. A conventional plant for extrusion of polymer pipes comprises an extruder, a die-head, a calibrating device, a cooling equipment, a pulling device, and a device for cutting and/or for coiling up the pipe.

The manufacture of polyethylene materials for use in pressure pipes is discussed in an article by Scheirs et al (Scheirs, Böhm, Boot and Leevers: PE100 Resins for Pipe Applications, TRIP Vol. 4, No. 12 (1996) pp. 408-415). The authors discuss the production technology and properties of PE100 pipe materials. They point out the importance of proper comonomer distribution and molecular weight distribution in order to optimize slow crack growth and rapid crack propagation.

**Process details**

In the following the multistage process of the present invention is described. The multistage process according to the present invention is further illustrated in Figure 1.

The first polymerization stage takes place in the first reactor as also shown in Fig. 1. The first reactor is preferably a first slurry phase reactor and more preferably a first loop reactor.

The temperature in the first reactor is typically from 50 to 115 °C, preferably from 60 to 110 °C and in particular from 70 to 100 °C. The pressure is typically from 1 to 150 bar, preferably from 1 to 100 bar.

In the first reactor a first intermediate material comprising preferably essentially consisting of fraction (A), optionally together with a pre-polymer fraction, is obtained, c.f. Fig. 1. The first intermediate material is obtained by polymerizing in the first reactor fraction (A), optionally in the presence of the pre-polymer fraction, as shown in Fig. 1.

The first intermediate material comprising, preferably essentially consisting of fraction (A), optionally together with a pre-polymer fraction, has an $MFR_2$ (190 °C, 2.16 kg) of 220 to 400 g/10 min, preferably of 240 to 380 g/10 min and most preferably of 260 to 350 g/10 min.

For adjusting the $MFR_2$ of the first intermediate material preferably hydrogen is introduced into the first reactor for polymerizing fraction (A). The hydrogen feed is preferably adjusted to the ethylene feed in order to fulfill a hydrogen to ethylene ratio in the first reactor of 300 to 550 mol/kmol, more preferably of 350 to 500 mol/kmol, most preferably 360 to 450 mol/kmol.

Fraction (A) produced in the first reactor can be an ethylene homo- or copolymer fraction, c.f. Fig. 1. It is preferred that fraction (A) is an ethylene homopolymer.

However, if polymerizing a copolymer, comonomers preferably are selected from the group comprising 1-butenel 1-hexenel 4-methyl-1-pentene, 1-octene or their mixtures, especially preferred is 1-hexene. In a preferred embodiment in the first reactor, an ethylene homopolymer is polymerized so that no comonomer is fed to this first polymerization stage.

The residence time and the polymerization temperature in the first reactor are adjusted as such as to polymerize an ethylene homo- or copolymer fraction (A) typically in an amount of preferably 15 to 35 wt.-%, more preferably 20 to 30 wt.-% and most preferably 23 to 27 wt.-% based on the total weight of the base.

Furthermore, faction (A) in the process is as defined as above for the polyethylene composition of the present invention.

The first intermediate material comprising preferably essentially consisting of fraction (A), optionally together with a pre-polymer fraction, obtained in the first reactor is transferred to the second reactor as shown in Fig. 1. Optionally, but less preferred, the first intermediate is first transferred for a purging step into a flash vessel and subsequently to the second reactor. In the flash vessel the hydrocarbons are substantially removed from the polymer.

The second polymerization stage takes place in the second reactor. The second reactor is preferably a second slurry phase reactor and more preferably a second loop reactor.

The temperature in the second reactor is typically from 50 to 115 °C, preferably from 60 to 110 °C and in particular from 70 to 100 °C. The pressure is typically from 1 to 150 bar, preferably from 1 to 100 bar.

In the second reactor a second intermediate material, comprising preferably essentially consisting of fractions (A) and (B), optionally together with a pre-polymer fraction, is obtained, c.f. Fig. 1. The second intermediate material is obtained by polymerizing in the second reactor fraction (B) in the presence of fraction (A), optionally together with a pre-polymer fraction as shown in Fig. 1.

The obtained second intermediate material, comprising preferably essentially consisting of fractions (A) and (B), optionally together with a pre-polymer fraction, has preferably an $MFR_2$ (190 °C, 2.16 kg) of 250 to 600 g/10 min, more preferably of 270 to 550 g/10min, even more preferably of 300 to 500 g/10 min and most preferably of 320 to 450 g/10min.

The melt flow rate $MFR_2$ (190°, 2.16 kg) of the second intermediate material is 1.10 to 1.35 times, preferably 1.20 to 1.30 times the melt flow rate $MFR_2$ (190°, 2.16 kg) of fraction (A).

For adjusting the $MFR_2$ of the second intermediate material preferably hydrogen is introduced into the second reactor for polymerizing fraction (B). The hydrogen feed is preferably adjusted to the ethylene feed in order to fulfill a hydrogen to ethylene ratio in the second reactor of 380 to 600 mol/kmol, more preferably of 400 to 550 mol/kmol, most preferably 480 to 530 mol/kmol.

Fraction (B) produced in the second reactor can be an ethylene homo- or copolymer fraction, c.f. Fig 1. It is preferred that fraction (B) is an ethylene homopolymer.

However, if polymerizing a copolymer, comonomers preferably are selected from the group comprising 1-butenel 1-hexenel 4-methyl-1-pentene, 1-octene or their mixtures, especially preferred is 1-hexene. In a preferred embodiment in the second reactor, an ethylene homopolymer is polymerized so that no comonomer is fed to this second polymerization stage.

The residence time and the polymerization temperature in the second reactor are adjusted as such as to polymerize an ethylene homo- or copolymer fraction (B) typically in an amount of 15 to 45 wt.-%, preferably 25 to 35 wt.-% of the total base resin.

Furthermore, in the second reactor the residence time and the polymerization temperature are adjusted as such as to polymerize an ethylene homo- or copolymer fraction (B) thereby the amount of combined fractions (A) and (B), optionally together with a pre-polymer fraction, is preferably 49 to 55 wt.-%, more preferably 49 to 54 wt.-% and most preferably 49 to 53 wt.-% based on the total weight of the base resin.

Furthermore, combined factions (A) and (B) in the process are as defined as above for the polyethylene composition of the present invention.

The following specification shall apply independently to both reactors, first and second.

The first and the second polymerization stage in principle may be conducted in any reactor. Preferably, one or both of the first and second reactors is a slurry reactor. Such reactors include a continuous stirred tank reactor and a loop reactor. It is especially preferred to conduct the polymerization in a loop reactor. In such reactors the slurry is circulated with a high velocity along a closed pipe by using a circulation pump. Loop reactors are generally known in the art and examples are given, for instance, in US-A-4,582,816, US-A-3,405,109, US-A-3,324,093, EP-A-479 186 and US-A-5,391,654.

It is sometimes advantageous to conduct the first and/or second loop polymerization above the critical temperature and pressure of the fluid mixture. Such operations are described in US-A-5,391,654. In such an operation, the temperature is typically at least 85 °C, preferably at least 90 °C. Furthermore the temperature is typically not higher than 110°C, preferably not higher than 105°C. The pressure under these conditions is typically at least 40 bar, preferably at least 50 bar. Furthermore, the pressure is typically not higher than 150 bar, preferably not higher than 100 bar. In a preferred embodiment, the first and/or second polymerization stage, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

It is preferred that the temperature of the reaction in the first and second reactor differs by not more than 10 %, preferably from 0 % to 9 %.

Moreover, it is preferred that the pressure of the reaction in the first and second reactor differs by not more than 15 %, preferably from 0 % to 13 %. Preferably, the pressure in the first reactor is higher than in the second reactor.

In case the first and the second reactor are slurry phase reactors the slurry may be withdrawn from the first and/or second reactor either continuously or intermittently. The slurry withdrawn from the first polymerization comprises the first intermediate material as indicated in Fig. 1. The slurry withdrawn from the second polymerization stage comprises the second intermediate material as indicated in Fig. 1.

The slurry can be withdrawn continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants, the fluid which is withdrawn with the polymer evaporates in a flash vessel and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages, continuous withdrawal is often preferred.

The continuous withdrawal, on the other hand, has the problem that it typically withdraws the polymer in the same concentration as it is present within the reactor. To reduce the amount of hydrocarbons to be compressed, the continuous outlet is advantageously combined with a suitable concentration device, such as a hydrocyclone or sieve, as disclosed in EP-A-1 415 999 and EP-A-1 591 460. The polymer-rich stream is then directed to a flash, flash vessel, and the polymer-lean stream is returned directly into the reactor.

The second intermediate material comprising preferably consisting of fractions (A) and (B), optionally together with a pre-polymer fraction, obtained in the second reactor is transferred for a purging step into a flash vessel and then to a third reactor as shown in Fig. 1. In the flash vessel the hydrocarbons were substantially removed from the polymer. Optionally, but less preferred, the second intermediate is directly transferred to the third reactor.

The third polymerization stage takes place in the third reactor.

The third reactor is preferably a gas phase reactor, more preferably a fluidized bed gas phase reactor.

In a fluidized bed gas phase reactor, an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of a fluidization gas comprising the olefin monomer, eventually comonomer(s), eventually chain growth controllers or chain transfer agents, such as hydrogen, and eventually inert gas. The inert gas can thereby be the same or different as the inert gas used in the slurry phase reactor. The fluidization gas is introduced into an inlet chamber at the bottom of the reactor. To make sure that the gas flow is uniformly distributed over the cross-sectional surface area of the inlet chamber, the inlet pipe may be equipped with a flow dividing element as known in the art, e. g. US-A-4,933,149 and EP-A-684 871.

From the inlet chamber the gas flow is passed upwards through the fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087261. Other types of fluidization grids are disclosed, amongst others, in US-A-4,578,879, EP 600 414 and EP-A-721 798. An overview is given in Geldart and Bayens: The Design of Distributors for Gas-fluidised Beds, Powder Technology, Vol. 42, 1985.

The fluidization gas passes through the fluidized bed. The superficial velocity of the fluidization gas must be higher than the minimum fluidization velocity of the particles contained in the fluidized bed, as otherwise no fluidization would occur. On the other hand, the velocity of the gas should be lower than the onset velocity of the pneumatic transport, as otherwise the whole bed would be entrained with the fluidization gas. The minimum fluidization velocity and the onset velocity of the pneumatic transport can be calculated when the particle characteristics are known by using common engineering practice. An overview is given, amongst others, in Geldart: Gas Fluidisation Technology, J. Wiley & Sons, 1996.

When the fluidization gas is contacted with the bed containing the active catalyst the reactive components of the gas, such as monomers and chain transfer agents, react in the presence of the catalyst to produce the polymer product. At the same time, the gas is heated by the reaction heat.

The unreacted fluidization gas is then removed from the top of the reactor, compressed and recycled into the inlet chamber of the reactor. Prior to the entry into the reactor, fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

After that, the gas is cooled in a heat exchanger to remove the reaction heat. The gas is cooled to a temperature which is lower than that of the bed to prevent the bed from being heated because of the reaction. It is possible to cool the gas to a temperature where a part of it condenses. When the liquid droplets enter the reaction zone they are vaporized. The vaporization heat then contributes to the removal of the reaction heat. This kind of operation is called condensed mode and variations of it are disclosed, amongst others, in WO-A-2007/025640, US-A-4,543,399, EP-A-699 213, and WO-A-94/25495. It is also possible to add condensing agents into the recycle gas stream, as disclosed in EP-A-696 293. The condensing agents are non-polymerizable components, such as propane, n-pentane, isopentane, n-butane or isobutane, which are at least partially condensed in the cooler.

The polymeric product may be withdrawn from the gas phase reactor either continuously or intermittently. The polymeric product withdrawn from the gas phase reactor of the third polymerization stage is the base resin as shown in Fig. 1. Combinations of these methods may also be used. Continuous withdrawal is disclosed, amongst others, in WO-A-00/29452. Intermittent withdrawal is disclosed, amongst others, in US-A-4,621,952, EP-A-188 125, EP-A-250 169 and EP-A-579 426.

The top part of the at least one gas phase reactor may include a so called disengagement zone. In such a zone, the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed levels.

Also antistatic agent(s) may be introduced into the at least one gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes and alcohols.

The reactor may include a mechanical agitator to further facilitate mixing within the fluidized bed. An example of suitable agitator design is given in EP-A-707 513. In the gas phase reactor the base resin is obtained comprising preferably consisting of fractions (A), (B) and (C), optionally together with a pre-polymer fraction, c.f. Fig. 1. The base resin is obtained by polymerization of fraction (C) in the presence of fractions (A) and (B), optionally together with a pre-polymer fraction as shown in Fig. 1.

The temperature in the gas phase reactor typically is at least 70 °C, preferably at least 80 °C. The temperature typically is not more than 105 °C, preferably not more than 95 °C. The pressure is typically at least 10 bar, preferably at least 15 bar but typically not more than 30 bar, preferably not more than 25 bar.

Fraction (C) produced in the gas phase reactor preferably is an ethylene copolymer fraction as shown in Fig. 1. The fluidization gas stream thus preferably comprises comonomers preferably alpha-olefin conomoners with 3 to 12 carbon atoms, more preferably 4 to 8 carbon atoms. Suitable alpha-olefin comonomer species are 1-butene, 1-hexene, 4-methyl-1-pentene, 1-octene or their mixtures. Preferred are 1-butene or 1-hexene and most preferred is 1-hexene. The comonomer used in the gas phase reactor may be the same or different than that used in the first and/or second loop phase reactors.

The comonomer feed is preferably adjusted to the ethylene feed in order to fulfil a comonomer to ethylene ratio of at least [please add amount] mol/kmol, more preferably [please add amount] mol/kmol, most preferably [please add amount] mol/kmol.

Furthermore, fraction (C) in the process is as defined as above for the polyethylene composition of the present invention.

For adjusting the melt flow rate of the base resin obtained in the gas phase reactor, hydrogen is introduced into the reactor for polymerizing fraction (C). The hydrogen feed is preferably adjusted to the ethylene feed in order to fulfill a hydrogen to ethylene ratio in the gas phase reactor of 0.1 to 20 mol/kmol, more preferably of 0.5 to 10 mol/kmol, and most preferably of 1.5 to 4.0 mol/kmol. Moreover, in the gas phase reactor the residence time and the polymerization temperature are adjusted as such as to polymerize a fraction (C) preferably in an amount of 30 to 75 wt.-%, more preferably 35 to 60 wt.-%, even more preferably 45 to 50 wt.-% and most preferably 46.5 to 50 wt.-% of the total base resin.

Further, the final polyethylene base resin emerging from the gas phase reactor, comprising, preferably consisting of fractions (A), (B) and (C), optionally together with a pre-polymer fraction, has a density of more than 952 kg/m$^3$ and equal or less than 957.0 kg/m$^3$, preferably of more than 952.5 and equal to or less than 956.0 kg/m$^3$, more preferably of more than 953 kg/m$^3$ and equal to or less than 956.0 kg/m$^3$ and most preferably of more than 953.5 and equal to or less than 955.5 kg/m$^3$ determined according to IS0 1183-1:2004.

In case a pre-polymer fraction is present, the base resin comprises a pre-polymer fraction, which adds to the amount of fraction (A). The pre-polymer fraction preferably is present in the base resin in an amount of up to 7.5 wt%, more preferably in an amount of up to 5 wt% and most preferably in an amount of up to 3 wt% of the total base resin. The pre-polymer fraction preferably is an ethylene homopolymer.

Furthermore, the base resin in the process is as defined as above for the polyethylene composition of the present invention.

Optionally the process may further comprise a pre-polymerisation stage which precedes the first polymerization stage.

The purpose of the pre-polymerisation stage is to polymerise a small amount of polymer onto the catalyst at a low temperature and/or a low monomer concentration. By pre-polymerisation it is possible to improve the performance of the catalyst in slurry and/or modify the properties of the final polymer.

The pre-polymerisation is conducted in a pre-polymerization reactor. The pre-polymerization reactor is preferably a pre-polymerization slurry phase reactor or pre-polymerization gas phase reactor. More preferably the pre-polymerization reactor is a pre-polymerization slurry phase reactor and most preferably a pre-polymerization loop reactor.

The pre-polymerisation is preferably conducted in an inert diluent, typically a hydrocarbon diluent such as methane, ethane, propane, n-butane, isobutene, pentanes, hexanes, heptanes, octanes etc., or their mixtures. Preferably the diluent is a low boiling hydrocarbon having from 1 to 4 carbon atoms or a mixture of such hydrocarbons. The most preferred diluent is propane.

The temperature in the pre-polymerisation stage is typically from 0 °C to 90 °C., preferably from 20 °C to 80 °C, more preferably from 40 °C to 70 °C.

The pressure is not critical and is typically from 1 bar to 150 bar, preferably from 10 bar to 100 bar.

The amount of monomer is typically such that from 0.1 grams to 1000 grams of monomer per one gram solid catalyst component is polymerised in the pre-polymerisation stage. As the person skilled in the art knows, the catalyst particles recovered from a continuous pre-polymerisation reactor do not all contain the same amount of pre-polymer. Instead, each particle has its own characteristic amount which depends on the residence time of that particle in the pre-polymerisation reactor. As some particles remain in the reactor for a relatively long time and some for a relatively short time, then also the amount of pre-polymer on different particles is different and some individual particles may contain an amount of pre-polymer which is outside the above limits. However, the average amount of pre-polymer on the catalyst typically is within the limits specified above.

In addition to ethylene monomer it is possible to use one or more alpha-olefin comonomers in the pre-polymerisation stage if desired. Suitable comonomers are, for example, 1-butene, 1-hexene, 4-methyl-1-pentene, 1-octene and their mixtures.

It is however preferred that in the pre-polymerization stage an ethylene homopolymer prepolymer fraction is polymerized.

The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

The pre-polymer fraction, obtained in the pre-polymerization reactor is transferred to the first reactor as shown in Fig. 1.

The catalyst system according to the present invention, i.e. the catalyst and the cocatalyst according to the present invention, is preferably fed to the first polymerization reactor, c.f. Fig. 1, *"Without pre-polymerization stage"*, possibility **1**. However, where the solid catalyst component and the cocatalyst can be fed separately, it is possible that only a part of cocatalyst is introduced into the first polymerization stage and the remaining part into the subsequent polymerization stages as shown in Fig. 1, *"first and second polymerization stage"* possibility **1**. Also in such cases it is necessary to introduce as much cocatalyst into the first polymerization stage as necessary to obtain a sufficient polymerization reaction.

In case a pre-polymerization stage is in use the catalyst components are preferably all introduced to the pre-polymerization stage, c.f. Fig. 1, *"Pre-polymerization stage"*, possibility **2**. However, where the solid catalyst component and the cocatalyst can be fed separately, it is possible that only a part of cocatalyst is introduced into the pre-polymerization stage and the remaining part into the subsequent polymerization stages as shown in Fig. 1, *"Pre-polymerization stage, first and second polymerization stage"* in possibility **2**. Also in such cases it is necessary to introduce as much cocatalyst into the pre-polymerization stage as necessary to obtain a sufficient polymerization reaction.

The catalyst may be transferred into the polymerization zone by any means known in the art. It is thus possible to suspend the catalyst in a diluent and maintain it as homogeneous slurry. Especially preferred is to use oil having a viscosity from 20 to 1500 mPa·s as diluent, as disclosed in WO-A-2006/063771. It is also possible to mix the catalyst with a viscous mixture of grease and oil and feed the resultant paste into the polymerization zone. Still further, it is possible to let the catalyst settle and introduce portions of thus obtained catalyst mud into the polymerization zone in a manner as disclosed, for instance, in EP-A-428 054.

The present invention includes an embodiment in which a pre-polymerization stage is comprised and an embodiment which does not comprise a pre-polymerization stage as shown in Fig. 1, possibilities 2 or 1, respectively. Both embodiments are equally preferred.

In the embodiment of the present invention comprising a pre-polymerization stage, the pre-polymerization stage precedes the polymerization stages as shown in Fig. 1. The purpose of the pre-polymerization is to polymerize a small amount of polymer onto the catalyst at a low temperature and/or a low monomer concentration. By pre polymerization it is possible to improve the performance of the catalyst in slurry and/or modify the properties of the final polymer. The pre-polymerization stage may be conducted in slurry or gas phase. Preferably, the pre-polymerization is conducted in slurry, preferentially a loop reactor. Thus, the pre-polymerization stage may be conducted in a loop reactor.

The pre-polymerization is then preferably conducted in an inert diluent, typically a hydrocarbon diluent such as methane, ethane, propane, n-butane, isobutene, pentanes, hexanes, heptanes, octanes etc., or their mixtures. Preferably, the diluent is a low boiling hydrocarbon having from 1 to 4 carbon atoms or a mixture of such hydrocarbons. The most preferred diluent is propane.

The temperature in the pre-polymerization stage is typically from 0 °C to 90 °C, preferably from 20 °C to 80 °C, more preferably from 40 °C to 70 °C.

The amount of monomer is typically such that from 0.1 grams to 1000 grams of monomer per one gram solid catalyst component is polymerized in the pre-polymerization stage. As the person skilled in the art knows, the catalyst particles recovered from a continuous pre-polymerization reactor do not all contain the same amount of pre-polymer. Instead, each particle has its own characteristic amount which depends on the residence time of that particle in the pre-polymerization reactor. As some particles remain in the reactor for a relatively long time and some for a relatively short time, then also the amount of pre-polymer on different particles is different and some individual particles may contain an amount of pre-polymer which is outside the above limits. However, the average amount of pre-polymer on the catalyst typically is within the limits specified above.

In addition to ethylene monomer it is possible to use one or more alpha-olefin comonomers in the pre-polymerization stage if desired. Suitable comonomers are, for example, 1-butene, 1-hexene, 4-methyl-1-pentene, 1-octene and their mixtures.

Furthermore, the pre-polymer fraction in the process is as defined as above for the polyethylene composition of the present invention.

The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

Furthermore, in the pre-polymerization reactor the residence time and the polymerization temperature are adjusted as such as to polymerize a pre-polymer fraction in an amount of 1 to 5 wt.-%, preferably of 2 to 4 wt.-% and most preferably of 2.5 to 3.5 wt.-% of the total base resin.

The pressure is not critical and is typically from 1 bar to 150 bar, preferably from 10 bar to 100 bar. The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

The polyethylene composition of the invention preferably is produced in a multistage process which further comprises a compounding step as indicated in Fig. 1, wherein the base resin, which is typically obtained as a base resin powder from the reactor, is extruded in an extruder and then pelletized to polymer pellets in a manner known in the art to form the polyethylene composition of the invention.

Optionally, but less preferred, the base resin obtained from the reactor is purged with nitrogen before extrusion.

Optionally, additives and/or other polymer components can be added to the base resin during the compounding step to produce the polyethylene composition of the present invention.

Additives typically used with polyolefins are for instance pigments, carbon black, stabilizers (e.g. antioxidant agents), antiacids and/or anti-UV's, antistatic agents and utilization agents (such as processing aid agents).

Preferably, the polyethylene composition comprises carbon black in an amount of 8 wt% or below, more preferably in an amount of 1 to 4 wt%, of the total polyethylene composition.

Further preferred, the amount of additives different from carbon black is 1 wt% or less, more preferably 0.5 wt% or less.

The additives can be added separately to the compounding step. However, it is preferred to precompound them into one or more master batches and add the one or more master batches to the base resin during the compounding step.

It is preferred that the addition of further polymer components is limited to an amount of less than 3 wt.-%, preferably less than 2 wt.-% with respect to the total polyethylene composition according to the present invention.

Preferably, the base resin of the invention obtained from the gas phase reactor is compounded in the extruder together with additives and/or other polymer in a manner known in the art.

The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In one embodiment, the extrusion step is carried out using feed rates of 200 kg/h to 600 kg/h, more preferably 250 kg/h to 400 kg/h in pilot production scale. Preferably, the throughput is typically from 10 to 50 tons/h in commercial production.

The following conditions apply to both, the pilot production scale and the commercial production. The screw speed of the extruder is preferably 300 rpm to 500 rpm, more preferably 350 rpm to 450 rpm.

Preferably, in said extrusion step, the SEI (specific energy input) of the extruder is 200 kWh/ton to 300 kWh/ton, more preferably 220 kWh/ton to 280 kWh/ton, whereby the SEI is directly calculated from the electric input of the extruder ignoring the intrinsically limited effectiveness.

The melt temperature in said extrusion step is preferably 220°C to 320°C, more preferably 250°C to 290°C.

Preferably the temperatures at the zones of an extruder having 4 zones are set as follows. Zone 1 is preferably set to 80 to 120°C. Zone 2 is preferably set to 180 to 220°C. Zone 3 is preferably set to 230 to 270°C. Zone 4 is preferably set to 160 to 200°C. More preferably the 4 zones are set as follows:

Zone 1 from 90 to 110°C; zone 2 from 190 to 210°C; zone 3 from 240 to 260°C; and zone 4 from 170 to 190°C.

The polyethylene composition has a melt flow rate $MFR_5$ (190 °C, 5 kg) of 0.12 to 0.21 g/10min, preferably 0.13 to 0.20 g/10min, more preferably 0.14 to 0.19 g/10min and most preferably 0.15 to 0.19 g/10min determined according to ISO 1133.

Furthermore, the polyethylene composition has a polydispersity index PI within the range of higher than 4.9 $Pa^{-1}$ and equal to or less than 9.0 $Pa^{-1}$, preferably within the range of equal to or higher than 5.5 $Pa^{-1}$ and equal to or less than 8.5 $Pa^{-1}$ and most preferably within the range of equal to or higher than 6.0 $Pa^{-1}$ and equal to or less than 6.5 $Pa^{-1}$.

Moreover, the polyethylene composition in the process is as defined as above the polyethylene composition of the present invention.

The inventive polyethylene compositions produced according to the inventive multistage process have a broad molecular weight distribution, high polydispersity index PI and comprise a base resin with a high density for the production of pipes and concomitantly the polyethylene composition has an improved homogeneity. After a single compounding step with a pigment, such as e.g. carbon black, the polyethylene composition preferably has a WSR of below 2.5%, more preferably below 1.5%, most preferably below 1.1%, when measured according to ISO 18 553/2002-03-01. The lower limit of the WSR is preferably 0.001%.

In yet a further aspect, the present invention is concerned with an article comprising the polyethylene composition as described above obtainable by a multistage process as described above and the use of such a polyethylene composition for the production of an article.

The article is preferably a pipe or pipe fitting. Such pipes are further characterized by the properties as indicated above.

**Examples:**

**1. Definitions**

a) *Melt Flow Rate*

The melt flow rate (MFR) is determined according to IS0 1133 and is indicated in g/10 min. The MFR is an indication of the flowability, and hence the processability, of the polymer. The higher the melt flow rate, the lower the viscosity of the polymer. The $MFR_5$ of polyethylene is measured at a temperature of 190 °C and a load of 5 kg, the $MFR_2$ of polyethylene at a temperature of 190 °C and a load of 2.16 kg and the $MFR_{21}$ of polyethylene is measured at a temperature of 190 °C and a load of 21.6 kg. The quantity FRR (flow rate ratio) denotes the ratio of flow rates at different loads. Thus, $FRR_{21/5}$ denotes the value of $MFR_{21}/MFR_5$.

b) *Density*

Density of the polymer was measured according to IS0 1183-1:2004 Method A on compression moulded specimen prepared according to EN IS0 1872-2 (Feb 2007) and is given in $kg/m^3$.

c) *Comonomer content*

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$, respectively. All spectra were recorded using a $^{13}C$ optimized 7 mm magic-angle spinning (MAS) probehead at 150 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {[1], [2], [6]}. Standard single-pulse excitation was employed utilizing the transient NOE at short recycle delays of 3 s {[1], [3]) and the RSHEPT decoupling scheme {[4], [5]}. A total of 1024 (1k) transients were acquired per spectrum. This setup was chosen due to its high sensitivity towards low comonomer contents.

Quantitative $^{13}C\{^1H)$ NMR spectra were processed, integrated and quantitative properties determined using custom spectral analysis automation programs. All chemical shifts are internally referenced to the bulk methylene signal ($\delta+$) at 30.00 ppm {[9]}.

Characteristic signals corresponding to the incorporation of 1-hexene were observed {[9]} and all contents calculated with respect to all other monomers present in the polymer.

$$H = I_{*B4}$$

With no other signals indicative of other comonomer sequences, i.e. consecutive comonomer incorporation, observed the total 1-hexene comonomer content was calculated based solely on the amount of isolated 1-hexene sequences:

$$H_{total} = H$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)^*(I_{2S} + I_{3S})$$

The relative content of ethylene was quantified using the integral of the bulk methylene ($\delta+$) signals at 30.00 ppm:

$$E = (1/2)*I_{\delta+}$$

The total ethylene comonomer content was calculated based on the bulk methylene signals and accounting for ethylene units present in other observed comonomer sequences or end-groups:

$$E_{total} = E + (5/2)*B + (3/2)*S$$

The total mole fraction of 1-hexene in the polymer was then calculated as:

$$fH = ( H_{total} / ( E_{total} + H_{total} )$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * (fH * 84.16) / ( (fH * 84.16) + ((1-fH) * 28.05) )$$

[1] Klimke, K., Parkinson, M., Piel, C., Kaminsky, W., Spiess, H.W., Wilhelm, M., Macromol. Chem. Phys. 2006; 207:382.

[2] Parkinson, M., Klimke, K., Spiess, H.W., Wilhelm, M., Macromol. Chem. Phys. 2007; 208:2128.

[3] Pollard, M., Klimke, K., Graf, R., Spiess, H.W., Wilhelm, M., Sperber, O., Piel, C., Kaminsky, W., Macromolecules 2004; 37:813.

[4] Filip, X., Tripon, C., Filip, C., J. Mag. Reson. 2005, 176, 239.

[5] Griffin, J.M., Tripon, C., Samoson, A., Filip, C., and Brown, S.P., Mag. Res. in Chem. 2007, 45, S1, S198.

[6] Castignolles, P., Graf, R., Parkinson, M., Wilhelm, M., Gaborieau, M., Polymer 50 (2009) 2373.

[7] Zhou, Z., Muemmerle, R., Qiu, X., Redwine, D., Cong, R., Taha, A., Baugh, D. Winniford, B., J. Mag. Reson. 2007, 187, 225.

[8] Busico, V., Carbonniere, P., Cipullo, R., Pellecchia, R., Severn, J., Talarico, G., Macromol. Rapid Commun. 2007, 28, 1128.

[9] J. Randall, Macromol. Sci., Rev. Macromol. Chem. Phys. 1989, C29, 201.

*d) Rheological parameters*

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta^*$, the dynamic shear viscosity, $\eta'$, the out-of-phase component of the complex shear viscosity, $\eta''$ and the loss tangent, tan $\eta$, which can be expressed as follows:

$$G' = \frac{\sigma_0}{\gamma_0} \cos\delta \; [Pa] \qquad (3)$$

$$G'' = \frac{\sigma_0}{\gamma_0} \sin\delta \; [Pa] \qquad (4)$$

$$G^* = G' + iG'' \; [Pa] \qquad (5)$$

$$\eta^* = \eta' - i\eta'' \; [Pa{\cdot}s] \qquad (6)$$

$$\eta' = \frac{G''}{\omega} \; [Pa{\cdot}s] \qquad (7)$$

$$\eta'' = \frac{G'}{\omega} \; [Pa{\cdot}s] \qquad (8)$$

The determination of so-called Shear Thinning Index, which correlates with MWD and is independent of Mw, is done as described in equation 9.

$$SHI_{(x/y)} = \frac{Eta^* \text{ for } (G^* = x \text{ kPa})}{Eta^* \text{ for } (G^* = y \text{ kPa})} \qquad (9)$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity ($\eta^*$) were obtained as a function of frequency ($\omega$).

Thereby, e.g. $\eta^*_{300rad/s}$ (eta$^*_{300rad/s}$) is used as abbreviation for the complex viscosity at the frequency of 300 rad/s and $\eta^*_{0.05rad/s}$ (eta$^*_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s.

The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index *EI(x)*. The elasticity index *Ei(x)* is the value of the storage modulus, G' determined for a value of the loss modulus, G" of *x* kPa and can be described by equation 10.

$$EI(x) = G^{'} for \ (G^{''} = x \ kPa) \ [Pa] \qquad (10)$$

For example, the EI(5kPa) is the defined by the value of the storage modulus G', determined for a value of G" equal to 5 kPa.

The viscosity $eta_{747}$ is measured at a very low, constant shear stress of 747 Pa and is inversely proportional to the gravity flow of the polyethylene composition, i.e. the higher $eta_{747}$ the lower the sagging of the polyethylene composition.

The polydispersity index, *PI,* is defined by equation 11.

$$PI = \frac{10^5}{G'(\omega_{COP})} \ , \qquad \omega_{COP} = \omega \ for \ (G'= G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.

[2] "The influence of molecular structure on some rheological properties of polyethylene", Heino, E.L., Borealis Polymers Oy, Porvoo, Finland, Annual Transactions of the Nordic Rheology Society, 1995.

[3] "Definition of terms relating to the non-ultimate mechanical properties of polymers", Pure & Appl. Chem., Vol. 70, No. 3, pp. 701-754, 1998.

e) *Molecular weight*

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)} \qquad (1)$$

$$M_w = \frac{\sum_{i=1}^{N} (A_i \times M_i)}{\sum A_i} \qquad (2)$$

$$M_z = \frac{\sum_{i=1}^{N} (A_i \times M_i^2)}{\sum (A_i/M_i)} \qquad (3)$$

For a constant elution volume interval $\Delta V_i$, where $A_i$ and $M_i$ are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methylphenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 - 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

f) *Pressure test on notched pipes (NPT); Slow crack propagation resistance*

The slow crack propagation resistance is determined according to ISO 13479-2009 in terms of the number of hours the pipe withstands a certain pressure at a certain temperature before failure. The pressure test is carried out on notched SDR11 pipes having a outer diameter of 110 mm. A pressure of 9.2 bars and a temperature of 80 °C have been used. Notching is made with a climb milling cutter with a 60° included-angle V-cutter conforming to ISO 6108, having a cutting rate of 0.010 ± 0.002 (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference. The length of the notch is 110 ± 1 mm.

$$h = 0.5 \left[ d_{em} - \sqrt{(d_{em}^2 - b_s^2)} \right] + 0.866\, b_s$$

where

$b_s$      is the width of machined surface of the notch in mm;
$d_{em}$    is the measured mean pipe outside diameter in mm.

g) *Pressure test on un-notched pipes (PT); resistance to internal pressure*

The resistance to internal pressure has been determined in a pressure test on pressure test on un-notched 32 mm SDR 11 pipes having a length of 450 mm is carried out in water-inside and water-outside environment according to ISO 1167-1:2006. End caps of type A were used. The time to failure is determined in hours. A hoop stress of 5.9 MPa at a temperature of 80°C and at a hoop stress at 12.6 and 13.0 MPa tested at a temperature of 20°C was applied.

h) *Pipe Small Scale Steady State (S4) Test, S4 critical temperature; Rapid Crack Propagation* (RCP)

The rapid crack propagation (RCP) resistance of a pipe is determined according to a method called the S4-test (Small Scale Steady State), which is described in ISO 13477:1997 (E).
According to the RCP-S4 test, a pipe is tested, which has an axial length not below 7 pipe diameters. The outer diameter of the pipe is about 110 mm or greater and its wall thickness about 10 mm or greater. When determining the RCP properties of a pipe in connection with the present invention, the outer diameter and the wall thickness, have been selected to be 110 mm and 10 mm, respectively. While the exterior of the pipe is at ambient pressure (atmospheric pressure), the pipe is pressurized internally, and the internal pressure in the pipe is kept constant at a pressure of 4 bar positive pressure. The pipe and the equipment surrounding it are controlled to a predetermined temperature. A number of discs have been mounted on a shaft inside the pipe to prevent decompression during the tests. A knife projectile is shot, with well-defined forms, towards the pipe close to its one end in the so-called initiating zone in order to start a rapidly running axial crack. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test, but the crack propagation exceeds 4.7 times the pipe diameter. The critical temperature ($T_{crit}$), i.e. the ductile-to-brittle transition temperature as measured according to ISO 13477:2008 (E) is the lowest temperature at which the pipe passes the test. The lower the critical temperature the better since it results in an extension of the applicability of the pipe.

*i) Charpy notched impact strength*

Charpy impact strength was determined according to ISO179/1eA:2000 on V-notched samples of 80*10*4 mm$^3$ at 0°C (Charpy impact strength (0°C)) and -20°C (Charpy impact strength (-20°C)). Samples were cut from plaques of 4 mm thickness prepared by compression molding according to ISO 293:2004 using the conditions defined in chapter 3.3 of ISO 1872-2:2007.

*j) Tensile modulus*

As a measure for stiffness, the tensile modulus (E-modulus) of the compositions was measured at 23°C on compression molded specimens according to ISO 527-2:1993. The specimens (1B type) were cut from plaques of 4 mm thickness prepared by compression molding according to ISO 293:2004 using the conditions defined in chapter 3.3 of ISO 1872-2:2007. The modulus was measured at a speed of 1 mm/min.

*k) Measure of homogeneity/White spot rating (WSR)*

The polyethylene composition was compounded by extruding the base resin together with carbon black masterbatch and further additives to pellets in a counter-rotating twin screw extruder CIM90P (manufactured by Japan Steel Works). The amounts for carbon black and optional further additives are indicated in the Examples below. Furthermore the compounding conditions are given in Table 1.

The white spot rating of the compounded composition is determined according ISO 18 553/2002-03-01 as follows:
Pellets of the composition which is obtained after a single compounding step is analysed by collecting 6 different pellets where from each pellet one cut is used (thickness cut $20\pm2$ micrometer). The cut for the measurement of the white spot rating should be taken near the middle of the pellet (sample) with rotation microtome Type Leica RM2265. Preferably the cut is in flow direction of the melt through the whole of the pelletiser.

The cuts are evaluated at a magnification of 100x, and the size and the number of the non-coloured inclusions ("white-spots", agglomerates, particles) on the total area of each cut is determined. All white spots with a diameter > 5 $\mu$m are counted. (Probably mention that white spots are non pigmented high molecular weight parts in the polymer). Transmission light microscope Olympus BX41 with XYZ motorised stage from Märzhäuser and particle inspector Software from Olympus was used.

The white spot rating test "homogeneity" is based on the ISO 18553/2002-03-01. In this test, inhomogeneities of the composition present after a single compounding step as described above, which appear as white spots, are determined and rated according to the rating scheme given in ISO 18553/2002-03-01. The lower the composition is rated (less amount of high molecular weight particles) in this test the better is the homogeneity of the composition.

*l) Mg, Al and Ti content / ICP analysis in ZN silica based catalysts*

The elemental analysis of a catalyst was performed by taking a solid sample of mass, M. Samples were diluted up to a known volume, V, by dissolving in nitric acid ($HN0_3$, 65 %, 5 % of V) and freshly deionised (DI) water (5 % of V). The solution was further treated with hydrofluoric acid (HF, 40 %, 3 % of V) and diluted with DI water up to the final volume, V, and left to stabilize for two hours.

The analysis was run at room temperature using a Thermo Elemental iCAP 6300 Inductively Coupled Plasma - Optical Emission Spectrometer (ICP-OES) which was calibrated using a blank (a solution of 5 % $HN0_3$ and 3 % HF), and standards of 0.5 ppm, 1 ppm, 10 ppm, 50 ppm, 100 ppm and 300 ppm of Al, Mg and Ti in solutions of 5 % $HN0_3$ and 3 % HF.

Immediately before analysis the calibration is 'resloped' using the blank and 100 ppm standard, a quality control sample (20 ppm Al, Mg and Ti in a solution of 5 % $HN0_3$, 3 % HF in DI water) is run to confirm the reslope. The QC sample is also run after every $5^{th}$ sample and at the end of a scheduled analysis set.

The content of Mg was monitored using the 285.213 nm line and the content for Ti using 336.121 nm line. The content of aluminium was monitored via the 167.079 nm line, when the Al concentration in the ICP sample was between 0-10 ppm (calibrated only to 100 ppm) and via the 396.152 nm line for Al concentrations above 10 ppm.

The reported values are an average of three successive aliquots taken from the same sample and are related back to the original catalyst by inputting the original mass of sample and the dilution volume into the software.

*m) Particle size of the catalyst*

Particle size is measured by Coulter Counter LS 200 at room temperature with n-heptane as medium.

**2. Examples**

Preparation of the catalyst

*Complex preparation:*

87 kg of toluene were added into the reactor. Then 45.5 kg Bomag A (butyloctyl magnesium) in heptane were also added in the reactor. 161 kg 99.8 % 2-ethyl-1-hexanol were then introduced into the reactor at a flow rate of 24 to 40 kg/h. The molar ratio between BOMAG-A and 2-ethyl-1-hexanol was 1: 1.83.

*Solid catalyst component preparation:*

330 kg silica (calcined silica, Sylopol® 2100) and pentane (0.12 kg/kg carrier) were charged into a catalyst preparation reactor. Then EADC (Ethylaluminium dichloride) (2.66 mol/kg silica) was added into the reactor at a temperature of below 40 °C during two hours and mixing was continued for one hour. The temperature during mixing was 40 - 50 °C. Then the Mg complex prepared as described above was added (2.56 mol Mg/kg silica) at 50 °C during two hours and mixing was continued at 40 - 50 °C for one hour. 0.84 kg pentane/kg silica was added into the reactor and the slurry was stirred for 4 hours at the temperature of 40 - 50 °C. Finally, TiCl$_4$ (1.47 mol/kg silica) was added during at least 1 hour at 55 °C to the reactor. The slurry was stirred at 50 - 60 °C for five hours. The catalyst was then dried by purging with nitrogen.
Molar composition of the ready catalyst component is: Al/Mg/Ti = 1.5/1.4/0.8 (mol/kg silica).

*Multi-stage polymerization for inventive example IE1*

A first loop reactor having a volume of 500 dm$^3$ was operated at 95 °C and 62 bar pressure. Into the reactor were introduced of propane diluent, ethylene and a gas mixture containing 25 vol.-% of hydrogen in nitrogen with the feed rates as given in the Table 1. In addition, polymerization catalyst prepared according to the description above was introduced into the reactor at a rate as given in the Table. TEA used as cocatalyst was also fed to the loop reactor. No comonomer was introduced into the reactor. The conditions in the reactor are shown in Table 1.
The polymer slurry was withdrawn from the first loop reactor and transferred into a second loop reactor.
The second loop reactor having a volume of 500 dm$^3$ was operated at 95 °C and 54 bar pressure. Into the reactor were introduced kg/h of propane diluent, ethylene and a gas mixture containing 25 vol.-% of hydrogen in nitrogen with the feed rates as given in the Table 1. In addition, polymerization catalyst prepared according to the description above was introduced into the reactor at a rate as given in the Table. TEA used as cocatalyst was also fed to the loop reactor. No comonomer was introduced into the reactor. The conditions in the reactor are shown in Table 1.
The polymer slurry was withdrawn from the second loop reactor and transferred into a flash vessel operated at 3 bar pressure and 70 °C temperature where the hydrocarbons were substantially removed from the polymer. The polymer was then introduced into a gas phase reactor operated at a temperature of 85 °C and a pressure of 20 bar.
The polymerization was continued with the conditions shown in Table 1.
The resulting polymer was stabilized with 2200 ppm of Irganox B225, 1500 ppm Ca-stearate, 2.3 wt% of carbon black, based on the final polyethylene composition. For addition of carbon black a master batch has been used. The mixture was then extruded to pellets in a counter-rotating twin screw extruder CIM90P (manufactured by Japan Steel Works). The conditions are given in Table 1.

*Multi-stage polymerization for inventive example IE2*

The reaction sequence as described above for IE1 was repeated with the difference that a pre-polymerization stage was added. Catalyst and cocatalyst TEA were fed to the pre-polymerization vessel. The conditions and amounts are given in Table 1.

*Multi-stage polymerization for comparative examples CE1*

A loop reactor, in Table 1 designated as the first loop reactor, having a volume of 500 dm$^3$ was operated at 95 °C and 58 bar pressure. Into the reactor were introduced of propane diluent, ethylene and a gas mixture containing 25 vol.-% of hydrogen in nitrogen with the feed rates as given in the Table 1. In addition, polymerization catalyst prepared according to the description above was introduced into the reactor at a rate as given in the Table. TEA used as cocatalyst was also fed to the loop reactor. No comonomer was introduced into the reactor. The conditions in the reactor are shown in Table 1.

The polymer slurry was withdrawn from the loop reactor and transferred into a flash vessel operated at 3 bar pressure and 70 °C temperature where the hydrocarbons were substantially removed from the polymer. The polymer was then introduced into a gas phase reactor operated at a temperature of 85 °C and a pressure of 20 bar.

The polymerization was continued with the conditions shown in Table 1.

The resulting polymer was purged with nitrogen (about 50 kg/h) for one hour, stabilized with 2200 ppm of Irganox B225, 1500 ppm Ca-stearate 2.3 wt% of carbon black, based on the final polyethylene composition. For addition of carbon black a master batch has been used. The mixture was then extruded to pellets in a counter-rotating twin screw extruder CIM90P (manufactured by Japan Steel Works). The conditions are given in Table 1.

*Multi-stage polymerization for comparative example CE2*

The reaction sequence as described above for CE1 was repeated with the difference that a pre-polymerization stage was added. Catalyst and cocatalyst TEA were fed to the pre-polymerization vessel. The conditions and amounts are given in Table 1.

*Multi-stage polymerization for comparative example CE3*

The polymerization was repeated as decribed above for CE1 but using the commercially available catalyst Lynx200 by BASF. Again TEA was used as cocatalyst. The conditions and amounts are given in Table 1. As it can be seen from the data in Table 1 this catalyst results in a significantly different balance of properties.

The properties and specifications of the base resins, polyethylene compositions and pipes of IE1, IE2 and CE1 to CE3 are indicated in Table 2.

*Carbon Black Master batch (CB-MB):*

| Elftex TP | 39.5 wt.-% |
| Irganox 1010 | 0.1 wt% |
| PE-1 | 60.4 wt.-% |

*List of Additives*

| Ca stearate: | obtained from Faci, CAS No.: 1592-23-0 |
| Irganox B 225: | Stabilizer and antioxidant blend, obtained from Ciba, now part of BASF |
| Irganox 1010 | Antioxidant, Pentaerythrityl-tetrakis(3-(3',5'-di-tert. butyl-4-hydroxyphenyl)-propionate obtained from Ciba, now part of BASF CAS No.: 6683-19-8 |
| Elftex TP: | Carbon Black from Cabot CAS No.: 1333-86-4 |
| PE-1: | Ethylene-butylene compolymer having a comonomer content of 1.7 wt.%, an $MFR_2$ (2.16 kg, 190°C, ISO 1133) of 30 g/10 min and a density of 959 kg/m$^3$) |

Table 1: Polymerization conditions

| | IE1 | IE2 | CE1 | CE2 | CE3 |
|---|---|---|---|---|---|
| Catalyst inventive (= i) comparative (= c) | I | i | i | i | c |
| Cocatalyst | TEA | TEA | TEA | TEA | TEA |
| Pre-polymerizer | Off | on | off | on | off |

(continued)

| | IE1 | IE2 | CE1 | CE2 | CE3 |
|---|---|---|---|---|---|
| Temperature [°C] | | 60 | | 60 | |
| Pressure [bar] | | 63 | | 62 | |
| Catalyst feed [g/h] | | 5.6 | | 8.3 | |
| Cocatalyst feed [g/h] | | 4.0 | | 4.1 | |
| Al/Ti [mol/mol] | | 11 | | 11 | |
| $C_2$ feed [kg/h] | | 2.0 | | 2.0 | |
| $H_2$ feed [g/h] | | 3.99 | | 3.9 | |
| $C_3$ feed [kg/h] | | 46 | | 50 | |
| Production rate [kg/h] | | 1.9 | | 1.9 | |
| Split [wt.-%] | | 2.3 | | 2.7 | |
| **1st Loop reactor** | | | | | |
| Temperature [°C] | 95 | 95 | 95 | 95 | 95 |
| Pressure [bar] | 62 | 62 | 58 | 58 | 58 |
| Catalyst feed [g/h] | 6.3 | | 10.8 | | 1.2 |
| Cocatalyst feed [g/h] | 199.4 | 397.5 | 9.3 | 4.1 | 2.2 |
| Al/Ti [mol/mol] | 11 | 11 | 10 | 11 | 12 |
| $C_2$ feed [kg/h] | 23 | 23 | 39 | 38 | 42 |
| $H_2$ feed [g/h] | 75 | 108 | 113 | 114 | 159 |
| $C_3$ feed [kg/h] | 83 | 37 | 117 | 120 | 97 |
| $H_2/C_2$ ratio [mol/kmol] | 377 | 445 | 468 | 522 | 706 |
| $C_2$ conc.[mol-%] | 3.6 | 4.2 | 3.6 | 3.4 | 3.8 |
| Split [wt.-%] | 25.0 | 25.8 | 52.0 | 49.9 | 52.5 |
| $MFR_2$ [g/10 min] | 285 | 332 | 456 | 576 | 381 |
| **2nd Loop reactor:** | | | not in use | | |
| Temperature [°C] | 95 | 95 | | | |
| Pressure [bar] | 54 | 56 | | | |
| Cocatalyst feed [g/h] | 0.0 | 0.0 | | | |
| $C_2$ feed [k/h] | 27 | 23 | | | |
| $H_2$ feed [g/h] | 98 | 62 | | | |
| $H_2/C_2$ ratio [mol/kmol] | 497 | 515 | | | |
| $C_2$-concentration [mol-%] | 3,7 | 3,6 | | | |
| Split [wt.-%] | 27.7 | 24.2 | | | |
| $MFR_2$ [g/10 min] | 346 | 431 | | | |
| **Gas phase reactor:** | | | | | |
| Temperature [°C] | 85 | 85 | 85 | 85 | 85 |
| Pressure [bar] | 20 | 20 | 20 | 20 | 20 |
| Cocatalyst feed [g/h] | 0 | 0 | 0 | 0 | 0 |
| $C_2$ feed [kg/h] | 57 | 55 | 37 | 37 | 46 |

(continued)

| Gas phase reactor: | | | | | |
|---|---|---|---|---|---|
| $H_2$ feed [g/h] | 0.12 | 1.74 | 0.97 | 1.36 | 20.00 |
| $C_6$ feed [kg/h] | 1.25 | 1.53 | 0.94 | 1.05 | 1.78 |
| $H_2/C_2$ ratio [mol/kmol] | 1.77 | 2.51 | 4.13 | 4.88 | 24.04 |
| $C_6/C_2$ ratio [mol/kmol] | 11.6 | 17.4 | 23.7 | 23.9 | 34.3 |
| $C_6/C_2$ feed ratio [g/kg PE] | 22 | 28 | 25 | 28 | 39 |
| $C_2$-concentration [mol-%] | 13,6 | 13,2 | 7,2 | 8,0 | 13,8 |
| Split [wt.-%] | 47.3 | 47.7 | 48.0 | 47.4 | 47.5 |
| Density [kg/m³] | 954,1 | 953,9 | 952.8 | 952.5 | 950,9 |
| $C_6$ content [wt.-%] | 0,5 | <0,5 | 0.7 | 0.5 | 0.7 |
| **Compounding:** | | | | | |
| Feed [kg/h] | 219 | 221 | 208 | 220 | 221 |
| Screw Speed [rpm] | 350 | 349 | 330 | 349 | 328 |
| SEI [kWh/t] (consumed electric energy) | 249 | 246 | 214 | 218 | 237 |
| Melt temperature [°C] | 261 | 268 | 254 | 253 | 259 |
| Zone 1 temperature [°C] | 100 | 100 | 100 | 100 | 100 |
| Zone 2 temperature [°C] | 150 | 150 | 150 | 150 | 150 |
| Zone 3 temperature [°C] | 250 | 250 | 250 | 250 | 250 |
| Zone 4 temperature [°C] | 180 | 180 | 180 | 180 | 180 |

Table 2: Specifications and properties

| | IE1 | IE2 | CE1 | CE2 | CE3 |
|---|---|---|---|---|---|
| **Base resin** | | | | | |
| Density [kg/m³] | 954 | 954.5 | 952.8 | 952.5 | 951,2 |
| **Polyethylene composition** | | | | | |
| PI [Pa⁻¹] | 6.2 | n.d. | 3.7 | 3.9 | 3.3 |
| complex viscosity eta at 0.05 rad/s [kPa·s] | 395.9 | n.d. | 235.4 | 251.2 | 105.9 |
| complex viscosity eta at 300 rad/s [kPa·s] | 1124 | n.d. | 1263 | 1165 | 957 |
| G'(5 kPa) [Pa] | 4299 | n.d. | 2867 | 3096 | 2819 |
| G'(2 kPa) [Pa] | 1612 | n.d. | 979 | 991 | 938 |
| $SHI_{2.7/210}$ | 584 | n.d. | 94 | 113 | 67 |
| $SHI_{1/100}$ | 261 | n.d. | 32 | 40 | 24 |
| $SHI_{5/300}$ | 1010 | n.d. | 197 | 228 | 129 |
| **Polyethylene composition** | | | | | |
| Density | 965,6 | 966 | 964.0 | 965,8 | 962.7 |
| $MFR_5$ [g/10 min] | 0.19 | 0.15 | 0.18 | 0.18 | 0.19 |
| $MFR_{21.6}$ [g/10 min] | 7.4 | 6.1 | 9,0 | 8,9 | 8.0 |
| $FRR_{21/5}$ | 38.9 | 40.7 | 50,0 | 49,4 | 42,1 |

(continued)

| Polyethylene composition | | | | | |
|---|---|---|---|---|---|
| Mn | 10000 | | 8000 | 8000 | 9000 |
| Mw | $2.55\cdot10^5$ | | $2.45\cdot10^5$ | $2.45\cdot10^5$ | $2.36\cdot10^5$ |
| Mz | $1.216\cdot10^6$ | | $1.42\cdot10^6$ | $1.41\ 10^6$ | $1.33\cdot10^6$ |
| PD (Mw/Mn) | 25 | | 30.6 | 30.6 | 26.2 |
| White spot rating | 0.6 | 1.0 | 6.4 | 10.8 | 2.8 |
| WSR evaluation | +++ | +++ | -- | --- | - |
| **Pipe** | | | | | |
| NPT (9.2 bar/80°C) [h] | 547.5* | 429.5* | 2371 | 1715 | 1493 |
| PT, 13 MPA/20 °C [h] | 267* | 399* | 235* | 467* | |
| PT, 12.6 MPA/20 °C [h] | 1158* | 922* | 392* | 1879* | |
| PT, 5.9 MPA/80 °C [h] | 1369* | 1615* | 2360* | 2390 | |
| S4 [$T_c$/°C] | -22.3 | n.d. | -23.1 | -22.4 | -14.8 |
| S4 rating | ++ | n.d | ++ | ++ | - |
| nd not determined<br>* average of two measurements<br>+++ superior; ++ very good; + good; $\pm$ sufficient; - poor; -- very poor; --- insufficient | | | | | |

## Claims

1. A polyethylene composition comprising
a base resin having a density of more than 952.0 kg/m$^3$ and equal to or less than 957.0 kg/m$^3$, determined according to ISO 1183-1:2004,
wherein the composition has a melt flow rate MFR$_5$ (190°C, 5 kg) of 0.12 to 0.21 g/10min and a flow rate ratio FRR$_{21/5}$, being the ratio of MFR$_{21.6}$ to MFR$_5$, of 30 to 55, determined according to ISO 1133, and
the composition has a polydispersity index PI within the range of higher than 4.9 Pa$^{-1}$ and equal to or less than 9.0 Pa$^{-1}$, determined by dynamic shear measurements complying with ISO 6721-1 and ISO 6721-10.

2. The polyethylene composition according to claim 1, wherein the polyethylene composition has a shear thinning index SHI$_{5/300}$ of more than 250 and equal to or less than 1500.

3. The polyethylene composition according to claim 1 or 2 wherein the polyethylene composition has a content of units derived from hexene of 0.45 to 0.95 wt.-%.

4. The polyethylene composition according to any of the preceding claims wherein the polyethylene composition has a storage modulus of G' (2 kPa) of 1000 Pa to 2000 Pa.

5. The polyethylene composition according to any of the preceding claims wherein the polyethylene composition has a melt flow rate MFR$_{21.6}$ (190°C, 21.6 kg) of 5.0 to 13.0 g/10min, determined according to ISO 1133.

6. The polyethylene composition according to any of the preceding claims, wherein the polyethylene composition has a complex viscosity at 0.05 rad/s eta*$_{0.05}$ rad/s of 300 kPa·s to 450 kPa·s.

7. The polyethylene composition according to any of the preceding claims, wherein the polyethylene composition has a white spot rating of below 2.5% according to ISO 18 553/2002-03-01.

8. The polyethylene composition according to any of the preceding claims, wherein the base resin comprises at least three ethylene homo- or copolymer fractions (A), (B) and (C) being different in their weight average molecular weight

$M_w$,

wherein fractions (A) and (B) are both an ethylene homopolymer and fraction (C) is a copolymer of ethylene and at least one alpha-olefin comonomer units with 3 to 12 carbon atoms,

whereby fraction (A) has a melt flow rate $MFR_2$ (190°, 2.16 kg) of 220 to 400 g/10min,

the melt flow rate $MFR_2$ (190°, 2.16 kg) of combined fractions (A) and (B) is 1.10 to 1.35 times the melt flow rate $MFR_2$ (190°, 2.16 kg) of fraction (A) and

wherein combined fractions (A) and (B) are present in an amount of 50 to 55 wt.-% with respect to the base resin.

9. A polyethylene composition according to any of the preceding claims obtainable by a multistage process, the multistage process comprising

   a) polymerizing ethylene in the presence of

      (i) a silica supported Ziegler Natta catalyst having a molar composition of the catalyst including

      | | |
      |---|---|
      | Al | 1.30 to 1.65 mol/kg silica, |
      | Mg | 1.25 to 1.61 mol/kg silica, |
      | Ti | 0.70 to 0.90 mol/kg silica |

      and having a mean particle size (D50) of 7 to 15 $\mu$m;
      (ii) in a first loop reactor in the presence of an alkyl aluminium compound and a chain transfer agent for obtaining a first intermediate material, the first intermediate material having a melt flow rate $MFR_2$ (190 °C, 2.16 kg) of 220 to 400 g/10min; and

   b) transferring the reaction product including said first intermediate material to a second loop reactor

      (i) feeding ethylene to the second loop reactor
      (ii) further polymerizing said first intermediate material
      for obtaining a second intermediate material, the second intermediate material having a melt flow rate $MFR_2$ (190°, 2.16 kg) of 1.10 to 1.35 times the melt flow rate $MFR_2$ (190°, 2.16 kg) of said first intermediate material; and

   c) transferring the reaction product including said second intermediate material to a gas phase reactor

      (i) feeding ethylene and comonomer to the gas phase reactor
      (ii) further polymerizing said second intermediate material
      for obtaining the base resin having a density of more than 952.0 kg/m$^3$ and equal to or less than 957.0 kg/m$^3$, determined according to ISO 1183-1:2004,

   d) extruding the base resin together with stabilizers and carbon black into the polyethylene composition wherein the composition has a melt flow rate $MFR_5$ (190°C, 5 kg) of 0.12 to 0.21 g/10min and a flow rate ratio $FRR_{21/5}$, being the ratio of $MFR_{21.6}$ to $MFR_5$, of 30 to 55, determined according to ISO 1133, and a polydispersity index PI within the range of higher than 4.9 Pa$^{-1}$ and equal to or less than 9.0 Pa$^{-1}$, determined by dynamic shear measurements complying with ISO 6721-1 and ISO 6721-10.

10. An article comprising the polyethylene composition according to any of claims 1 to 9.

11. The article according to claim 10 being a pipe or pipe fitting.

12. The pipe according to claim 11 having a pressure resistance of at least 100 h, determined according to ISO 1167-1:2006 at a hoop stress of 13.0 MPa and 80 °C and/or a a pressure resistance of at least 1000 h, determined according to ISO 1167-1:2006 at a hoop stress of 5.9 MPa and 80 °C.

13. The pipe according to claims 11 or 12 having a S4 critical temperature of - 15.0°C or lower.

14. Use of a polyethylene composition according to any of claims 1 to 9 for the production of an article.

**Patentansprüche**

1. Polyethylenzusammensetzung, umfassend
   ein Basisharz, das eine Dichte von mehr als 952,0 kg/m$^3$ und gleich zu oder weniger als 957,0 kg/m$^3$ aufweist, bestimmt gemäß ISO 1183-1:2004,
   wobei die Zusammensetzung ein Schmelzflussindex MFR$_5$ (190 °C, 5 kg) von 0,12 bis 0,21 g/10 min und ein Flussindexverhältnis FRR$_{21/5}$, welches das Verhältnis von dem MFR$_{21,6}$ zu dem MFR$_5$ ist, von 30 bis 55, bestimmt gemäß ISO 1133, und
   die Zusammensetzung einem Polydispersitätsindex PI innerhalb des Bereichs von höher als 4,9 Pa$^{-1}$ und gleich zu oder weniger als 9,0 Pa$^{-1}$ aufweist, bestimmt mittels dynamischer Schermessungen, die ISO 6721-1 und ISO 6721-10 erfüllen.

2. Polyethylenzusammensetzung nach Anspruch 1, wobei die Polyethylenzusammensetzung einen Strukturviskositätsindex SHI$_{5/300}$ von mehr als 250 und gleich zu oder weniger als 1500 aufweist.

3. Polyethylenzusammensetzung nach Anspruch 1 oder 2, wobei die Polyethylenzusammensetzung ein Gehalt von 0,45 bis 0,95 Gew.-% an Einheiten aufweist, die sich von Hexen ableiten.

4. Polyethylenzusammensetzung nach einem der vorhergehenden Ansprüche, wobei die Polyethylenzusammensetzung einen Speichermodul von G' (2 kPa) von 1000 Pa bis 2000 Pa aufweist.

5. Polyethylenzusammensetzung nach einem der vorhergehenden Ansprüche, wobei die Polyethylenzusammensetzung einen Schmelzflussindex MFR$_{21,6}$ (190 °C, 21,6 kg) von 5,0 bis 13,0 g/10 min aufweist, bestimmt gemäß ISO 1133.

6. Polyethylenzusammensetzung nach einem der vorhergehenden Ansprüche, wobei die Polyethylenzusammensetzung eine komplexe Viskosität bei 0,05 rad/s eta*$_{0,05}$ rad/s von 300 kPa·s bis 450 kPa·s aufweist.

7. Polyethylenzusammensetzung nach einem der vorhergehenden Ansprüche, wobei die Polyethylenzusammensetzung eine Weißfleckenbewertung von unter 2,5 % gemäß ISO 18 553/2002-03-01 aufweist.

8. Polyethylenzusammensetzung nach einem der vorhergehenden Ansprüche, wobei das Basisharz mindestens drei Ethylenhomo- oder -copolymerfraktionen (A), (B) und (C) umfasst, die sich in ihrem Gewichtsmittel des Molekulargewichts M$_W$ unterscheiden,
   wobei die Fraktionen (A) und (B) beide ein Ethylenhomopolymer sind und die Fraktion (C) ein Copolymer von Ethylen und mindestens einer alpha-Olefincomonomereinheit mit 3 bis 12 Kohlenstoffatomen ist,
   wobei die Fraktion (A) einen Schmelzflussindex MFR$_2$ (190 °, 2,16 kg) von 220 bis 400 g/10 min aufweist,
   der Schmelzflussindex MFR$_2$ (190 °, 2,16 kg) der vereinten Fraktionen (A) und (B) das 1,10- bis 1,35-Fache des Schmelzflussindexes MFR$_2$ (190 °, 2,16 kg) der Fraktion (A) beträgt, und
   wobei die vereinten Fraktionen (A) und (B) mit einer Menge von 50 bis 55 Gew.-% in Bezug auf das Basisharz vorliegen.

9. Polyethylenzusammensetzung nach einem der vorhergehenden Ansprüche, erhältlich durch ein mehrstufiges Verfahren, wobei das mehrstufige Verfahren das Folgende umfasst:

   a) Polymerisieren von Ethylen in Gegenwart von

   (i) einem silicageträgerten Ziegler-Natta-Katalysator, der eine molare Zusammensetzung des Katalysators aufweist, umfassend:

   | | |
   |---|---|
   | Al | 1,30 bis 1,65 mol/kg Silica, |
   | Mg | 1,25 bis 1,61 mol/kg Silica, |
   | Ti | 0,70 bis 0,90 mol/kg Silica |

   (ii) in einem ersten Schlaufenreaktor in Gegenwart von einer Alkylaluminiumverbindung und einem Kettenüberträger zum Erhalten von einem ersten Zwischenmaterial, wobei das erste Zwischenmaterial einen Schmelzflussindex MFR$_2$ (190 °C, 2,16 kg) von 220 bis 400 g/10 min aufweist; und

b) Überführen von dem Reaktionsprodukt, das das erste Zwischenmaterial enthält, zu einem zweiten Schlaufenreaktor:

(i) Zuführen von Ethylen zu dem zweiten Schlaufenreaktor,
(ii) weiteres Polymerisieren von dem ersten Zwischenmaterial,
zum Erhalten von einem zweiten Zwischenmaterial, wobei das zweite Zwischenmaterial einen Schmelzflussindex $MFR_2$ (190°, 2,16 kg), aufweist, der das 1,10- bis 1,35-Fache des Schmelzflussindexes $MFR_2$ (190 °, 2,16 kg) des ersten Zwischenmaterials beträgt; und

c) Überführen von dem Reaktionsprodukt, das das zweite Zwischenmaterial enthält, zu einem Gasphasenreaktor:

(i) Zuführen von Ethylen und Comonomer zu dem Gasphasenreaktor,
(ii) weiteres Polymerisieren von dem zweiten Zwischenmaterial,
zum Erhalten von dem Basisharz, das eine Dichte von mehr als 952,0 kg/m$^3$ und gleich zu oder weniger als 957,0 kg/m$^3$ aufweist, bestimmt gemäß ISO 1183-1:2004,

d) Extrudieren von dem Basisharz, zusammen mit Stabilisatoren und Ruß zu der Polyethylenzusammensetzung, wobei die Zusammensetzung einen Schmelzflussindex $MFR_5$ (190°C, 5 kg) von 0,12 bis 0,21 g/10 min und ein Flussindexverhältnis $FRR_{21/5}$, welches das Verhältnis von dem $MFR_{21,6}$ zu dem $MFR_5$ ist, von 30 bis 55, bestimmt gemäß ISO 1133, und einen Polydispersitätsindex PI innerhalb des Bereichs von höher als 4,9 Pa$^{-1}$ und gleich zu oder weniger als 9,0 Pa$^{-1}$ aufweist, bestimmt mittels dynamischer Schermessungen, die ISO 6721-1 und ISO 6721-10 erfüllen.

10. Artikel, umfassend die Polyethylenzusammensetzung nach einem der Ansprüche 1 bis 9.

11. Artikel nach Anspruch 10, der ein Rohr oder Rohranschlussstück ist.

12. Rohr nach Anspruch 11, das eine Druckbeständigkeit von mindestens 100 h, bestimmt bei einer Ringspannung von 13,0 MPa und 80 °C gemäß ISO 1167-1:2006, und/oder eine Druckbeständigkeit von mindestens 1000 h aufweist, bestimmt bei einer Ringspannung von 5,9 MPa und 80 °C gemäß ISO 1167-1:2006.

13. Rohr nach den Ansprüchen 11 oder 12, das eine kritische Temperatur S4 von -15,0 °C oder weniger aufweist.

14. Verwendung von einer Polyethylenzusammensetzung nach einem der Ansprüche 1 bis 9 für die Herstellung von einem Artikel.

**Revendications**

1. Composition de polyéthylène comprenant
une résine de base ayant une masse volumique, déterminée conformément à la norme ISO 1183-1:2004, supérieure à 952,0 kg/m$^3$ et égale ou inférieure à 957,0 kg/m$^3$,
laquelle composition a un indice de fluage $MFR_5$ (190°C, 5 kg) de 0,12 à 0,21 g/10 min et un rapport de fluage $FRR_{21/5}$, qui est le rapport du $MFR_{21,6}$ au $MFR_5$, de 30 à 55, les indices étant déterminés conformément à la norme ISO 1133, et
laquelle composition a un indice de polydispersité PI, déterminé par des mesures de cisaillement dynamique conformément aux normes ISO 6721-1 et ISO 6721-10, supérieur à 4,9 Pa$^{-1}$ et égal ou inférieur à 9,0 Pa$^{-1}$.

2. Composition de polyéthylène selon la revendication 1, laquelle composition de polyéthylène a un indice de fluidification par cisaillement $SHI_{5/300}$ supérieur à 250 et égal ou inférieur à 1500.

3. Composition de polyéthylène selon la revendication 1 ou 2, laquelle composition de polyéthylène a une teneur en motifs dérivés d'hexène de 0,45 à 0,95 % en poids.

4. Composition de polyéthylène selon l'une quelconque des revendications précédentes, laquelle composition de polyéthylène a un module de conservation G' (2 kPa) de 1000 Pa à 2000 Pa.

**5.** Composition de polyéthylène selon l'une quelconque des revendications précédentes, laquelle composition de polyéthylène a un indice de fluage $MFR_{21,6}$ (190°C, 21,6 kg), déterminé conformément à la norme ISO 1133, de 5,0 à 13,0 g/10 min.

**6.** Composition de polyéthylène selon l'une quelconque des revendications précédentes, laquelle composition de polyéthylène a une viscosité complexe à 0,05 rad/s eta*$_{0,05rad/s}$ de 300 kPa.s à 450 kPa.s.

**7.** Composition de polyéthylène selon l'une quelconque des revendications précédentes, laquelle composition de polyéthylène a un taux de taches blanches, conformément à la norme ISO 18 553/2002-03-01, inférieur à 2,5 %.

**8.** Composition de polyéthylène selon l'une quelconque des revendications précédentes, dans laquelle la résine de base comprend au moins trois fractions d'homopolymère ou de copolymère d'éthylène (A), (B) et (C), qui diffèrent par leur masse moléculaire moyenne en masse $M_w$,
dans laquelle les fractions (A) et (B) sont toutes deux un homopolymère d'éthylène et la fraction (C) est un copolymère d'éthylène et d'au moins un motif comonomère d'alpha-oléfine ayant 3 à 12 atomes de carbone,
en conséquence de quoi la fraction (A) a un indice de fluage $MFR_2$ (190°, 2,16 kg) de 220 à 400 g/10 min,
l'indice de fluage $MFR_2$ (190°, 2,16 kg) des fractions (A) et (B) combinées est de 1,10 à 1,35 fois l'indice de fluage $MFR_2$ (190°, 2,16 kg) de la fraction (A), et
dans laquelle les fractions (A) et (B) combinées sont présentes en une quantité de 50 à 55 % en poids par rapport à la résine de base.

**9.** Composition de polyéthylène selon l'une quelconque des revendications précédentes, pouvant être obtenue par un procédé à étages multiples, le procédé à étages multiples comprenant

a) la polymérisation d'éthylène en présence de

(i) un catalyseur de Ziegler Natta supporté sur de la silice, ayant une composition molaire du catalyseur comprenant
Al : 1,30 à 1,65 mol/kg de silice,
Mg : 1,25 à 1,61 mol/kg de silice,
Ti : 0,70 à 0,90 mol/kg de silice,
et ayant une granulométrie moyenne (D50) de 7 à 15 $\mu$m ;
(ii) dans un première réacteur à boucle en présence d'un composé alkyl-aluminium et d'un agent de transfert de chaîne pour que soit obtenu un premier matériau intermédiaire, le premier matériau intermédiaire ayant un indice de fluage $MFR_2$ (190°C, 2,16 kg) de 220 à 400 g/10 min; et

b) le transfert du produit réactionnel contenant ledit premier matériau intermédiaire dans un deuxième réacteur à boucle,

(i) l'introduction d'éthylène dans le deuxième réacteur à boucle,
(ii) la polymérisation encore une fois dudit premier matériau intermédiaire,
pour que soit obtenu un deuxième matériau intermédiaire, le deuxième matériau intermédiaire ayant un indice de fluage $MFR_2$ (190°, 2,16 kg) de 1,10 à 1,35 fois l'indice de fluage $MFR_2$ (190°, 2,16 kg) dudit premier matériau intermédiaire ; et

c) le transfert du produit réactionnel contenant ledit deuxième matériau intermédiaire dans un réacteur en phase gazeuse,

(i) l'introduction d'éthylène et de comonomère dans le réacteur en phase gazeuse,
(ii) la polymérisation encore une fois dudit deuxième matériau intermédiaire,
pour que soit obtenue la résine de base ayant une masse volumique, déterminée conformément à la norme ISO 1183-1:2004, supérieure à 952,0 kg/m$^3$ et égale ou inférieure à 957,0 kg/m$^3$,

d) l'extrusion de la résine de base conjointement avec des stabilisants et du noir de carbone en la composition de polyéthylène, laquelle composition a un indice de fluage $MFR_5$ (190°C, 5 kg) de 0,12 à 0,21 g/10 min et un rapport de fluage $FRR_{21/5}$, qui est le rapport du $MFR_{21,6}$ au $MFR_5$, de 30 à 55, les indices étant déterminés conformément à la norme ISO 1133, et un indice de polydispersité PI, déterminé par des mesures de cisaillement dynamique conformément aux normes ISO 6721-1 et ISO 6721-10, supérieur à 4,9 Pa$^{-1}$ et égal ou inférieur à

9,0 Pa$^{-1}$.

**10.** Article comprenant la composition de polyéthylène selon l'une quelconque des revendications 1 à 9.

**11.** Article selon la revendication 10, qui est un tuyau ou un raccord de tuyau.

**12.** Tuyau selon la revendication 11, ayant une résistance à la pression, déterminée conformément à la norme ISO 1167-1:2006 sous une tension de charge de 13,0 MPa et à 80°C, d'au moins 100 h, et/ou une résistance à la pression, déterminée conformément à la norme ISO 1167-1:2006 sous une tension de charge de 5,9 MPa et à 80°C, d'au moins 1000 h.

**13.** Tuyau selon la revendication 11 ou 12, ayant une température critique S4 de -15°C ou moins.

**14.** Utilisation d'une composition de polyéthylène selon l'une quelconque des revendications 1 à 9 pour la production d'un article.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1987097 A
- EP 1781712 A
- EP 1922342 A
- EP 1146079 A
- EP 688794 A
- WO 01155230 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087261 A
- US 4578879 A

- EP 600414 A
- EP 721798 A
- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 9619503 A
- WO 9632420 A
- WO 2006063771 A
- EP 428054 A

**Non-patent literature cited in the description**

- **SCHEIRS ; BÖHM ; BOOT ; LEEVERS.** PE100 Resins for Pipe Applications. *TRIP,* 1996, vol. 4 (12), 408-415
- **GELDART ; BAYENS.** The Design of Distributors for Gas-fluidised Beds. *Powder Technology,* 1985, vol. 42
- **GELDART.** Gas Fluidisation Technology. J. Wiley & Sons, 1996
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Reson.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198

- **CASTIGNOLLES, P. ; GRAF, R. ; PARKINSON, M. ; WILHELM, M. ; GABORIEAU, M.** *Polymer,* 2009, vol. 50, 2373
- **ZHOU, Z. ; MUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **J. RANDALL.** *Macromol. Sci., Rev. Macromol. Chem. Phys.,* 1989, vol. C29, 201
- Rheological characterization of polyethylene fractions. **HEINO, E.L. ; LEHTINEN, A. ; TANNER J. ; SEPPÄLÄ, J.** Theor. Appl. Rheol., Proc. Int. Congr. Rheol, 11th. Neste Oy, Porvoo, 1992, vol. 1, 360-362
- The influence of molecular structure on some rheological properties of polyethylene. **HEINO, E.L.** Annual Transactions of the Nordic Rheology Society. Borealis Polymers Oy, 1995

- Definition of terms relating to the non-ultimate mechanical properties of polymers. *Pure & Appl. Chem.,* 1998, vol. 70 (3), 701-754